(19)

Europäisches Patentamt

European Patent Office

Office européen des brevets

(11) **EP 4 167 145 A1**

(12) **EUROPEAN PATENT APPLICATION**

(43) Date of publication:
**19.04.2023 Bulletin 2023/16**

(21) Application number: **22202226.1**

(22) Date of filing: **18.10.2022**

(51) International Patent Classification (IPC):
*G06N 3/063* (2023.01)          *G06N 3/0464* (2023.01)

(52) Cooperative Patent Classification (CPC):
**G06F 17/141; G06F 17/153; G06N 3/0464;
G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2021 GB 202114855**

(71) Applicant: **Imagination Technologies Limited
Kings Langley
Hertfordshire WD4 8LZ (GB)**

(72) Inventors:
• **LA MANTIA, Sandra
Kings Langley, WD4 8LZ (GB)**
• **IMBER, James
Kings Langley, WD4 8LZ (GB)**
• **DIKICI, Cagatay
Kings Langley, WD4 8LZ (GB)**
• **ATHERTON, Tim
Kings Langley, WD4 8LZ (GB)**

(74) Representative: **Elkington and Fife LLP
Prospect House
8 Pembroke Road
Sevenoaks, Kent TN13 1XR (GB)**

(54) **IMPLEMENTATION OF DISCRETE FOURIER-RELATED TRANSFORMS IN HARDWARE**

(57)     A mechanism for performing a discrete Fourier-related transform using a hardware accelerator that comprises fixed-function circuitry including convolution hardware configured to perform one or more convolution operations. A matrix multiplication operation used in the discrete Fourier-related transform is performed by the convolution hardware using a convolution operation. A convolution kernel for the convolution operation is derived from a weight matrix representing a multiplicand or multiplier of the matrix multiplication operation.

FIGURE 2

EP 4 167 145 A1

**Description**

BACKGROUND

Discrete Fourier-related transforms (DFRTs), such as Discrete Fourier Transforms (DFTs) and Discrete Cosine Transforms (DCTs), are useful operations that have a variety of applications. A DFRT is any linear transformation that follows the principles of Fourier analysis, and includes any discrete transform that maps a discrete sequence of samples (representing a function) to a sequence of coefficients corresponding to orthogonal basis functions (for example, sine, cosine, complex exponential functions, and combinations thereof). One example use for a DFRT is in a neural network process, which is a process that employs one or more neural networks for the processing of data. For instance, a DFRT could be used in the pre-processing of data input to the neural network and/or the post-processing of data output from the neural network. The skilled person would readily envisage other potential uses for a DFRT. The mathematical principles behind DFRTs are well understood in the art.

A DFT decomposes a sequence of discrete samples into its spatial or temporal frequencies. A DFT is an essential component for the execution of a Fast Fourier Transform (FFT) or a Short Time Fourier Transform (STFT), both of which can similarly (but not exclusively) be used in neural network processes. As an example, an STFT can be used to process audio data in the generation of a spectrogram, which is often considered a first step in the signal processing of an audio input using a neural network (e.g. for speech recognition).

A DCT provides another approach for expressing a sequence of discrete samples in terms of frequencies, in the form of a weighted sum of cosine functions at different frequencies. As one example, DCT functions are useful in computing Mel Frequency Cepstral Coefficients (MFCCs) for an audio signal, and may form part of the processing of a spectrogram of the audio signal.

It is becoming increasingly common to implement neural networks on specially adapted hardware accelerators, usually known as neural network accelerators (NNAs). These devices - usually integrated circuits - are typically specialised at evaluating the most common and computationally intensive operations encountered when using a neural network for inference. For example, a neural network accelerator may include convolution hardware (e.g. a convolution engine or a plurality of convolution engines), which is specialised at evaluating convolutions and deconvolutions.

The specialised hardware elements of an NNA mean that there is a limited set/pool of operations for which there is native hardware support on the NNA.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Mechanisms are provided for performing a discrete Fourier-related transform using a hardware accelerator that comprises fixed-function circuitry including convolution hardware configured to perform one or more convolution operations. A matrix multiplication operation used in the discrete Fourier-related transform is performed by the convolution hardware implementing a convolution operation. A convolution kernel for the convolution operation is derived from a weight matrix representing a multiplicand or multiplier of the matrix multiplication operation.

There is proposed a method of implementing a discrete Fourier-related transform using a hardware accelerator comprising fixed-function circuitry including convolution hardware configured to perform one or more convolution operations, wherein the discrete Fourier-related transform comprises at least one matrix multiplication operation.

The method comprises: obtaining input data, wherein the input data contains values to undergo the discrete Fourier-related transform; obtaining at least one convolution kernel, wherein each convolution kernel is derived from a weight matrix that represents a multiplicand or multiplier for the at least one matrix multiplication operation of the discrete Fourier-related transform; and executing the discrete Fourier-related transform on the input data using the hardware accelerator, wherein the at least one matrix multiplication operation of the discrete Fourier-related transform is executed by using the convolution hardware to perform one or more convolution operations using the at least one convolution kernel.

The input data and/or the values to undergo the discrete Fourier related transform may comprise audio and/or visual data, e.g. an image. In a particular example, the values to undergo the discrete Fourier-related transform may comprise samples obtained from a microphone and/or camera or other sound/light sensitive sensor. In another example, the values to undergo the discrete Fourier-related transform may be derived from samples obtained from a microphone and/or camera or other sound/light sensitive sensor - in other words, the samples may have been subjected to some other audio/image processing before they undergo the discrete Fourier-related transform. The input data and/or the values to undergo the discrete Fourier related transform may, for instance, comprise data derived from a radar/RADAR system. The processing of such data is particularly important in the automotive industry, and there is a therefore a particular desire to improve the efficiency and flexibility of processing such data.

The input data may be a tensor (e.g. a vector or matrix) - i.e. an "input tensor". The input tensor may have dimensions of height, width, channel, batch and/or length (depending upon the precise implementation of the tensor).

"Fixed-function", in this context, refers to the property of the circuitry that the logic it implements cannot be reconfigured after manufacture (or at least cannot be reconfigured extensively). This is in contrast to field programmable logic, for example, which is reconfigurable. It is also in contrast with general purpose processor hardware, which is fully programmable to implement any (arbitrary) function or algorithm. The hardware accelerator may be comprised in an application specific integrated circuit (ASIC). The behaviour of the fixed-function circuitry may be programmable to a limited extent. A module of fixed-function circuitry may be able to perform its fixed function under the control of a limited set of parameters, for example. Each module may therefore be reconfigurable only in the sense that it can implement, for example, convolution or pooling with various strides and kernel sizes, but it is not fully programmable in the sense that it could execute an arbitrary algorithm.

In some examples, the discrete Fourier-related transform is a discrete Fourier transform.

The input data may comprise a first tensor, comprising only the real part of values to undergo the discrete Fourier transform. The discrete Fourier transform may comprise a first set of matrix multiplications comprising: multiplying the first tensor by a first weight matrix to produce a first multiplied tensor; and multiplying the first tensor by a second weight matrix $(Im(W))$ to produce a second multiplied tensor; the at least one convolution kernel comprises a first convolution kernel derived from the first weight matrix and a second convolution kernel derived from the second weight matrix; and the first set of matrix multiplications is executed by using the convolution hardware to perform at least two convolutions using the first and second convolution kernels.

In one approach, the input data comprises only real values to undergo the discrete Fourier transform; the first set of matrix multiplications is performed by: performing a first convolution on the first tensor using the first convolution kernel to produce the first multiplied tensor; and performing a second convolution on the first tensor using the second convolution kernel to produce the second multiplied tensor.

In another approach, the input data may further comprise a second tensor comprising only the imaginary parts of values to undergo the discrete Fourier transform. The discrete Fourier transform may comprise a second set of matrix multiplications comprising: multiplying the second tensor by the first weight matrix to produce a third multiplied tensor; and multiplying the second tensor by the second weight matrix to produce a fourth multiplied tensor; and the second set of matrix multiplications is executed by using the convolution hardware to perform at least two convolutions using the first and second convolution kernel to perform the second set of matrix multiplications.

In some examples, the discrete Fourier related transform is a discrete cosine transform.

There is also proposed a method of implementing a discrete fast Fourier transform using a hardware accelerator comprising fixed-function circuitry including convolution hardware configured to perform one or more convolution operations. The method comprises: obtaining input data, wherein the input data contains at least a real value input tensor containing, arranged along a first dimension, the real part of values to undergo a fast Fourier transform; selecting a dimension of the real value input tensor other than the first dimension; processing the real value input tensor to produce a first intermediate tensor, in which different parts of the real value input tensor, each comprising two or more values of the real value input tensor, are located at different locations in the selected dimension of the first intermediate tensor; performing a discrete Fourier transform on the first intermediate tensor to produce a first DFT intermediate tensor, the first DFT intermediate tensor containing a discrete Fourier transform of the different parts of the real value input tensor at different locations of a dimension of the first DFT intermediate tensor; and processing at least the first DFT intermediate tensor to produce an FFT output that contains a fast Fourier transform of the input data.

The input data may further contain an imaginary value input tensor containing the imaginary part of the values to undergo the fast Fourier transform. The method may comprise: processing the imaginary value input tensor to produce a second intermediate tensor, in which different parts of the imaginary value input tensor, each comprising two or more values of the imaginary value input tensor, are located at different locations in a dimension of the second intermediate tensor; performing a discrete Fourier transform on the second intermediate tensor to produce a second DFT intermediate tensor, the second DFT intermediate tensor containing a discrete Fourier transform of the different parts of the imaginary value input tensor at different locations of a dimension of the second DFT intermediate tensor; and processing the first DFT intermediate tensor and the second intermediate tensor to produce an FFT output that contains a fast Fourier transform of the input data.

In some examples, the first intermediate tensor comprises, at a first location in the dimension of the first intermediate tensor, odd-indexed values of the real value input tensor and, at a second location in the dimension of the first intermediate tensor, even-indexed values of the real value input tensor; and the second intermediate tensor comprises, at a first location in the dimension of the second intermediate tensor, odd-indexed values of the real value input tensor and, at a second location in the dimension of the second intermediate tensor, even-indexed values of the real value input tensor.

In some examples, the step of combining the first DFT intermediate tensor and the second DFT intermediate tensor comprises: splitting the first DFT intermediate tensor into a first DFT tensor containing a discrete Fourier transform of the odd-indexed parts of the real value input tensor and a second DFT tensor containing a discrete Fourier transform of the even-indexed parts of the real value tensor; splitting the second DFT intermediate tensor into a third DFT tensor containing a discrete Fourier transform of the odd-indexed parts of the imaginary value input tensor and a fourth DFT tensor containing a discrete Fourier transform of the even-indexed parts of the imaginary value tensor; and combining the first DFT tensor, the second DFT tensor, the third DFT tensor and the fourth DFT tensor using the hardware accelerator to produce an FFT output that contains a fast Fourier transformation of the input data.

There is also proposed a method of implementing a Mel Frequency Cepstral Coefficients, MFCC, operation using a hardware accelerator comprising convolution hardware configured to perform one or more convolution operations. The method comprises: obtaining input data, wherein the input data comprises a spectrogram to undergo an MFCC operation; converting the spectrogram, of the input data, to a mel-scale spectrogram by processing the input data using a mel-scale conversion convolution kernel that, for each i-th value in the input data, identifies a first and second value of the mel-scale spectrogram to which the i-th value of the input data contributes and a proportion of the i-th value of the input data that contributes to the first and second value of the mel-scale spectrogram; computing the logarithm of each value of the mel-scale spectrogram to produce a logarithm result; and computing the discrete cosine transform of the logarithm result using a herein described method.

There is also proposed a method of implementing a short time Fourier transform, STFT, using a hardware accelerator comprising fixed-function circuitry including convolution hardware configured to perform one or more convolution operations.

The method comprises: obtaining input data, wherein the input data contains values to undergo the short time Fourier transform, wherein the STFT comprises applying a discrete Fourier transform to each of a plurality of overlapping parts of the input data; obtaining at least one convolution kernel, wherein each convolution kernel is derived from a weight matrix that represents a multiplicand or multiplier for at least one multiplication operation of a discrete Fourier-related transform to be applied to each overlapping part of the input data; and executing the discrete Fourier-related transform on the input data using the hardware accelerator, wherein at least one multiplication operation of the discrete Fourier-related transform is executed by performing one or more strided convolution operations using the at least one convolution kernel, wherein the size of the stride of the strided convolution corresponds to an amount of overlap between the overlapping parts of the input data.

Each convolution kernel may be generated by reshaping and/or permuting the dimensions of a respective weight matrix. Preferably, the convolution kernel is generated before the input data is obtained.

In some examples, the input data comprises two or more sequences of values, each of which is to be individually transformed using a respective instance of the short time Fourier transform; and a single convolution operation is used to perform a matrix multiplication operation, of the at least one matrix multiplication operations, of multiple instances of the discrete Fourier-related transform on respective sequences of values.

In some examples, the convolution kernel is derived from the weight matrix and a windowing tensor that represents a windowing function to be applied to each overlapping part of the input data.

There is also provided a data processing system for carrying out any herein disclosed method, e.g., for implementing a discrete Fourier-related transform.

There is therefore provided a data processing system for implementing a discrete Fourier-related transform, wherein the discrete Fourier-related transform comprises at least one multiplication operation. The data processing system comprises: a hardware accelerator comprising fixed-function circuitry configured to perform a set of available elementary neural network operations, the fixed-function circuitry comprising at least convolution hardware configured to perform one or more convolution operations; and a controller configured to: obtain input data, wherein the input data contains values to undergo the discrete Fourier-related transform; obtain at least one convolution kernel, wherein each convolution kernel is derived from a weight matrix that represents a multiplicand or multiplier for at least one multiplication operation of the discrete Fourier-related transform; and execute the discrete Fourier-related transform on the input data using the hardware accelerator, wherein at least one multiplication operation of the discrete Fourier-relate transform is executed by using the convolution hardware to perform one or more convolution operations using the at least one convolution kernel.

The hardware accelerator may further comprises any one of, or any combination of two or more of: an activation unit, comprising an LUT; a local response normalisation unit, configured to perform a local response normalisation; an element-wise operations unit, configured to apply a selected operation to every pair of respective elements of two tensors; a pooling unit, configured to perform pooling operations, including max pooling and/or min pooling.

The data processing system may be embodied in hardware on an integrated circuit. There may be provided a method of manufacturing, at an integrated circuit manufacturing system, a data processing system. There may be provided an integrated circuit definition dataset that, when processed in an integrated circuit manufacturing system, configures the system to manufacture a data processing system. There may be provided a non-transitory computer readable storage medium having stored thereon a computer readable description of a data processing system that, when processed in an integrated circuit manufacturing system, causes the integrated circuit manufacturing system to manufacture an integrated circuit embodying a data processing system.

There may be provided an integrated circuit manufacturing system comprising: a non-transitory computer readable storage medium having stored thereon a computer readable description of the data processing system; a layout processing system configured to process the computer readable description so as to generate a circuit layout description of an integrated circuit embodying the data processing system; and an integrated circuit generation system configured to manufacture the data processing system according to the circuit layout description.

The layout processing system may be configured to determine positional information for logical components of a circuit derived from the integrated circuit description so as to generate a circuit layout description of an integrated circuit embodying the data processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 illustrates a hardware accelerator in which embodiments may be implemented;

Figure 2 illustrates an approach for performing a discrete Fourier transform;

Figure 3 illustrates an approach for performing a discrete Fourier transform;

Figure 4A illustrates a method for performing a Fast Fourier Transform;

Figure 4B illustrates a modified version of the method for performing a fast Fourier Transform;

Figure 5 illustrates a method for performing a twiddle factor process for use in a Fast Fourier Transform;

Figure 6 illustrates an approach for performing a short-time Fourier transform;

Figure 7 illustrates methods for calculating a spectrogram of input data;

Figure 8 illustrates other approaches for calculating a spectrogram of input data;

Figure 9 illustrates a method for performing a Mel Frequency Cepstral Coefficients analysis process;

Figure 10 illustrates overlapping windows for use in a Mel Frequency Cepstral Coefficients analysis process;

Figure 11 is a block diagram of a convolution engine as used in Figure 1;

Figure 12 is a block diagram of a data processing system according to an example;

Figure 13 is a block diagram of the memory manipulation module in Figure 12;

Figure 14 illustrates a method according to an embodiment;

Figure 15 shows a computer system in which a data processing system is implemented; and

Figure 16 shows an integrated circuit manufacturing system for generating an integrated circuit embodying a data processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. Embodiments hereafter described provide approaches for implementing discrete Fourier-related transforms (DFRTs) on a hardware accelerator, particularly a hardware accelerator configured for or designed for neural network processes, i.e. a neural network accelerator (NNA), which comprises convolution hardware (e.g. at least one convolution engine) designed for performing convolution (and deconvolution) operations.

Conventionally, if such a hardware accelerator requires the output of a DFRT, then any such transforms are performed using external or "off-chip" (to the hardware accelerator) general-purpose hardware, such as a CPU or GPU. The processed data is then provided or returned to the hardware accelerator, e.g. for further processing. It is noted that such general-purpose hardware may be on a same wafer as the hardware accelerator, but does not form part of the hardware accelerator per se.

Whilst evaluating such functions in general purpose hardware (positioned "off-chip" to the hardware accelerator) allows for flexibility, it is typically less efficient than dedicated hardware (in terms of execution time and power consumption). There is also an overhead (i.e. a need to use bandwidth) in transferring the data to be processed using the DFRT to and from the general-purpose hardware.

For instance, if data undergoing a neural network process that is being performed by the hardware accelerator requires a DFRT, then this data would be transferred from the hardware accelerator to the general-purpose hardware (e.g. CPU), i.e. transferring the data away from the hardware accelerator. This typically involves the hardware accelerator writing the data to a memory, and the CPU reading the data from the memory, before performing the function. This is likely to slow down the performance of the neural network process, especially if - as is often the case - the speed of memory access dominates. This may also result in the hardware accelerator stalling and waiting for the function to complete, e.g. if the next operation to be carried out depends on an output of the function. This may result in performance degradation.

There is yet to be an approach that facilitates the implementation of discrete Fourier-related transforms on an NNA or other hardware accelerator that has fixed-function circuitry designed for neural networks.

One advantage of such an approach is that it can make use of the greater computational resources of a hardware accelerator, and especially those that are configured for processing neural networks (i.e. a neural network accelerator). In particular, in a typical SOC (system on a chip), a CPU and/or GPU (i.e. general purpose hardware) typically have fewer computational resources compared to the NNA.

Another advantage is the avoidance or reduction of the transfer of data between different component parts of the device (i.e. reducing a number of read/writes to a main memory). This is because the NNA is able to perform previously unavailable functionality, avoiding a need for other components (e.g. general-purpose hardware) to perform such functionality and therefore saving valuable bandwidth.

One approach for implementing this functionality could be to design a dedicated hardware module to perform the desired discrete Fourier-related transform (e.g. the DFT or the DCT). This hardware module could be included in the hardware accelerator and used when needed. However, this approach would have the drawback that the dedicated hardware module would occupy additional area in the integrated circuit, in an already restricted space, leading to a larger hardware accelerator with additional resource requirements. Such an approach would also increase the hardware complexity that would, in turn, have an impact on software complexity. Moreover, because the evaluation of DFRTs typically represents a small part of the workload of the hardware accelerator, the utilisation of the dedicated hardware module will be low for most typical neural network processes that require the use of a DFRT. A dedicated hardware module for performing a DFRT may therefore be idle for a relatively large proportion of its operation, leading to undesirable "dark silicon" and inefficient use of silicon area.

In other words, a dedicated module will be inactive most of the time, and therefore be an inefficient use of design, engineering, resource, area, material and manufacturing capabilities.

Still another alternative would be to include one or more general programmable units, such as a CPU or digital signal processor (DSP), within the hardware accelerator itself. This would effectively be a hybrid solution that would avoid the need to consume system bandwidth in order to hand over the evaluation of each DFRT to an external general-purpose processor. However, it would have the disadvantages of increased hardware/software complexity, increased power consumption and greater integrated circuit area occupied.

Similarly, it would also be beneficial if other procedures that currently make use of a DFRT could be implemented within existing hardware accelerators without the need for dedicated hardware or outsourcing the procedure to an off-chip processor.

Purely by way of example, a DFRT may be associated with a neural network that forms part of a neural network process executed using the hardware accelerator (e.g. an NNA). In particular, a DFRT may form part of processing performed by the neural network and/or the pre-processing of data input to the neural network and/or the post-processing of data output by the neural network.

Examples according to the present disclosure provide ways to perform a DFRT using existing component operations that are already available on an exemplary hardware accelerator (e.g. an NNA). Such functions may be used, for instance, when performing a neural network process using the hardware accelerator, e.g. when simulating a neural network using the hardware accelerator or training a simulated neural network using the hardware accelerator. However, in some instances, the DFRT function(s) could be accessed by an external component (to the hardware accelerator) to perform this functionality, e.g. to make use of the greater computational power of the hardware accelerator to perform a DFRT or to offload processing from a general purpose CPU or GPU.

The present disclosure proposes approaches for using and adapting existing hardware operations (i.e. fixed-function circuitry) to perform a DFRT. Thus, a technical effect is achieved regardless of the application or program that is being run using the fixed-function circuitry, as the DFRT hardware implementation may be implemented in any suitable function or process to be performed (i.e. it is not tied to any particular function or program). Moreover, the proposed approach configures fixed-function circuitry in a new way, in order to perform a previously unavailable function using fixed-function circuitry.

Embodiments of the invention provide ways to perform a DFRT, and other procedures that rely upon or are built from or using such functions, based on existing component operations that are already available on an exemplary hardware accelerator.

In particular, it is proposed to perform procedural steps of a DFRT (e.g. that are not included in the component operations of the exemplary hardware accelerator) with procedural steps that are included in the component operations of the exemplary hardware accelerator. This facilitates use of existing architecture and functionality to perform additional, previously unavailable, operations using a/the same hardware accelerator.

One underlying recognition of this inventive concept exploits the identification that a part of a DFRT can be modelled as a matrix multiplication between a weight matrix and an input tensor. In the general case, both the weight and input tensors may be complex-valued, that is, have both real and imaginary parts. More specifically, it has been recognised that appropriate shaping of the weight matrix into one or more convolution kernels allows a convolution operation to be used to perform the matrix multiplication. A convolution operation can be performed by convolution hardware of a hardware accelerator, i.e. the NNA, such that the matrix multiplication steps (and therefore the DFRT) can be performed using the hardware accelerator.

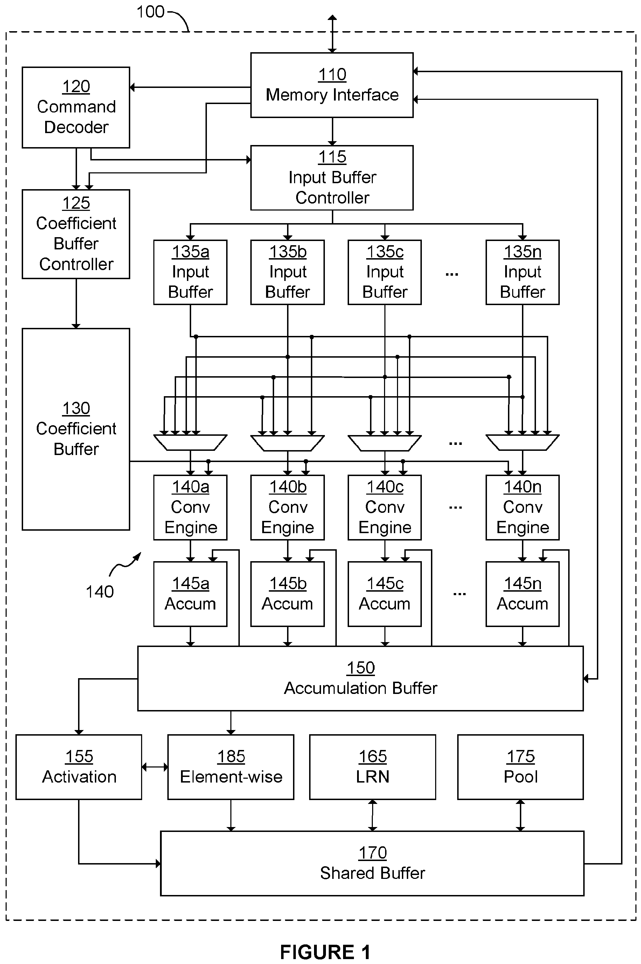

Figure 1 illustrates an exemplary hardware accelerator 100 in which embodiments can be implemented. A full description of the features of this exemplary hardware accelerator will be provided later in this disclosure.

As shown in Figure 1, an exemplary hardware accelerator 100 (also referred to herein as a neural network accelerator or NNA) has configurable fixed-function circuitry, which includes at least convolution hardware 140, e.g. formed of a set of convolution engines 140a-140n, specialised at convolution (and deconvolution) operations.

The hardware accelerator may further comprise (as configurable fixed-function circuitry) the following fixed-function hardware units:

- An element-wise operations unit 185, specialised at performing the same operation to every element of a tensor or to pairs of respective elements of two tensors;

- An activation unit 155, specialised at applying an activation function (which may be selectable, configurable, or fully programmable) to every element of a tensor, where an activation function may comprise using a lookup table to modify each element of the tensor (i.e. using a lookup operation);

- A local response normalisation (LRN) unit 165 (or "normalisation unit", for short), specialised at performing neighbourhood-related normalisation operations;

- A pooling unit 175, specialised at performing pooling operations, such as max pooling and min pooling; and

- A memory manipulation module (optional and not shown), specialised at reshaping the manner and order of dimensions of multi-dimensional tensors presented in memory.

The fixed-function circuitry is thereby able to perform (at least) a convolution and a deconvolution operation. A deconvolution operation is a transposed convolution operation. It may be further capable of performing at least one of the following elementary neural network operations:

an element-wise summing operation;

an element-wise subtraction operation;

an element-wise multiplication operation;

an element-wise maximum;

an element-wise minimum operation;

a max pooling operation or min pooling operation; and

one or more lookups in a look-up table.

This list of elementary neural network operations (including the convolution and/or deconvolution operation) may be referred to as the "restricted list" of elementary neural network operations.

For the purposes of the present disclosure, the hardware accelerator is described in the context of a hardware accelerator that processes tensors of the form [B, H, W, C], where B represents a batch dimension, H a height dimension, W a width dimension and C a channel dimension. However, the skilled person will appreciate that there are different conventions as to the order of these dimensions (e.g. [B, C, H, W] and the like).

The (convolution hardware of the) hardware accelerator used in the present disclosure may be configured to convolve a convolution kernel K with a tensor T to produce a convolved tensor K*T. The convolution kernel K has dimensions $[H_K, W_K, C_1, C_2]$, where $H_K$ represents the kernel height dimension, $W_K$ represents the kernel width dimension, $C_1$ represents the input channel dimension (which may correspond to the channel dimension of the tensor T for a conventional convolution) and $C_2$ represents the output channel dimension (which may correspond to the channel dimension of the convolved tensor K*T for a conventional convolution). For most convolutional operations, the size of $C_1$ is equal to the size of the channel dimension of the tensor T. The size of $C_2$ is equal to the size of the channel dimension of the convolved tensor, which can be selected in advance.

Considering convolution in terms of matrix multiplications is helpful for understanding how convolutions are used in place of matrix multiplications in the methods that follow. Conceptually, during a convolution, the convolution kernel K is applied to one or more spatial positions across the height and width dimensions of the tensor T (according to some predetermined or otherwise defined stride). At each position, a weighted summation that may be viewed in terms of a matrix multiplication is performed between the convolution kernel (the "weights") and the corresponding values of the tensor at the current position of the convolution kernel (i.e. those values that fall within the receptive field of that convolution operation when applied at that position). More specifically, at any given position for the convolution kernel K with respect to the tensor T, the kernel operates on values of dimensions $[H_K, W_K, C_1]$ (of the convolution kernel) and $[H_K, W_K, C_1]$ (the corresponding window of the tensor) for each $C_2$, to produce a tensor with $C_2$ output channels. This may be represented as a multiplication between a matrix of shape $[C_2, H_K W_K C_1]$ and a vector of shape $[H_K W_K C_1]$, representing the weights and the data respectively. The application of the convolution kernel at each position in the tensor T, (e.g. along the height dimension and the width dimension) yields HoWo vectors of length $C_2$ which can be viewed as a tensor having dimensions $[H_O, W_O, C_2]$. The size of dimensions Ho and Wo depend upon a size of the convolution kernel, the stride in the height and width dimensions, and/or whether padding is used. This process is repeated for each member of the batch in the tensor T, to produce a tensor having dimensions $[B, H_O, W_O, C_2]$. In the exemplary hardware accelerator 100, multiple positions for the kernel can be processed in parallel across the convolution hardware/engines 140, although this functionality is not essential (e.g. if the hardware does not support parallel processing).

Examples of the present disclosure use elementary neural network operations, executed by the fixed-function circuitry, e.g. the fixed-function hardware units, to implement a DFRT. In particular, it is herein recognised that a matrix multiplication operation facilitating the execution of a DFRT can be reformulated as a convolution operation using the fixed-function circuitry of the hardware accelerator, making use of at least the convolution hardware.

In the present implementation, the calculations may be performed in fixed-point arithmetic. Experiments have shown that the fixed-point implementation is sufficiently accurate that it does not significantly degrade the overall accuracy of the exemplary neural networks tested.

Examples of discrete Fourier-related transforms (DFRTs) include discrete Fourier transforms (DFTs), discrete cosine transforms (DCTs) and discrete sine transforms (DSTs). Other examples are well known to the skilled person, and include any suitable transform that makes use of Fourier principles to decompose a discretized sequence of samples into a sequence of coefficients corresponding to orthogonal (e.g. sinusoidal) basis functions.

Some discrete Fourier-related transforms make use of other forms of discrete Fourier-related transforms as part of their processing. For instance, a Fast Fourier Transform (FFT) makes use of one or more discrete Fourier transforms (DFTs) and a Short-time Fourier Transform (STFT) may make use of one or more DFTs and/or FFTs.

Embodiments may extend to processes that make use of discrete Fourier-related transforms, e.g. to generate a (hertz-scale or mel scale) spectrogram and/or Mel-frequency Cepstral coefficients (MFCC).

A discrete Fourier-related transform can be formulated into or structured as a process that includes at least one matrix multiplication step, and in particular, at least one matrix multiplication step between a weight matrix and a tensor. The present invention proposes to use at least one convolution (one of the elementary neural network operations) to perform the matrix multiplication(s) used in the DFRT.

As a first example, the result y of one example of a discrete cosine transform (DCT), in this case DCT type I, performed on a sequence of input data x of length N having indices n (0, 1, 2, ..., N-1) is defined by the following equation:

$$y = x_0 + (-1)^k x_{N-1} + \sum_{n=1}^{N-2} x_n 2\cos\left[\frac{n\pi}{N}\left(k + \frac{1}{2}\right)\right] \quad k=0, 1, ..., N-1 \tag{1}$$

This transform can be considered as a matrix multiplication of the form y = Wx, where W represents a DCT weight matrix of size NxN. Here, the DCT weight matrix is:

$$W = \begin{bmatrix} 1 & 1 & 1 & \cdots & 1 \\ w_{1,0} & w_{1,1} & w_{1,2} & \cdots & w_{1,N} \\ w_{2,0} & w_{2,1} & w_{2,2} & \cdots & w_{2,N} \\ \vdots & \vdots & \vdots & \ddots & \vdots \\ 1 & -1 & 1 & \cdots & (-1)^N \end{bmatrix} \tag{2}$$

where $w_{q,r} = 2\cos\left[\frac{q\pi}{N}\left(r + \frac{1}{2}\right)\right]$. This is one example of a DCT matrix, and other examples corresponding to other types of DCT are known in the art. It will be appreciated that the method described herein with reference to the matrix in Equation 2 applies to all other types of DCT.

The present invention recognises that it is possible to calculate a multiplication for a DFRT, such as a DCT, formulation using a convolution operation. In this first example, the DCT weight matrix W can be (re)shaped as a convolution kernel to be applied to a tensor containing the input data x.

It is herein recognised that there are multiple ways of representing a multiplication between matrices of shape [A,B] [B,D] as a convolution, where [A,B] is a matrix with constant elements and [B,D] is one with variable elements. Thus, matrix [A,B] may be used to represent the weight matrix and [B,D] may represent a tensor containing the input data. In particular, each instance or sequence of input data to undergo a DFRT (e.g. DCT) may be at a different position along dimension D.

Hereafter, some examples or alternatives for executing a multiplication between a first matrix (of size [A,B]) and a second matrix (of size [B,D]) are described. In the following examples, use of the exemplary hardware accelerator that processes tensors of the form [batch, height, width, channel] is assumed, such that the input tensor is of shape [Batch,H,W,$C_1$], the output tensor (being the transformed version of the input tensor) is of shape [Batch,H,W,$C_2$], and the kernel (representing the weights) is of shape [$H_k$,$W_k$,$C_1$,$C_2$]. It will be appreciated that the principles described herein may also be applied on hardware accelerators that use a different ordering of dimensions, e.g. [batch, channel, height, width] for data tensors.

In a first alternative, a kernel of shape [1,1,B,A] (representing the weight matrix) convolves with a tensor of shape [1,D,1,B] (containing the input data), resulting in an output tensor of shape [1,D,1,A] containing the transformed data y.

In a second alternative, the kernel is of shape [1,1,B,A] and the tensor containing the input data is of shape [1,1,D,B], resulting in transformed data of shape [1,1,D,A]. In a third alternative, the kernel is of shape [1,B,1,A] and the tensor containing the input data is of shape [1,D,B,1], resulting in transformed data of shape [1,D,1,A]. In a fourth alternative, the kernel is of shape [B,1,1,A] and the tensor containing the input data is of shape [1,B,D,1], resulting in transformed data of shape [1,1, D,A].

Other examples will be apparent to the skilled person.

The approach that is chosen depends on what is most optimal or most efficient. For example, it may depend on the context of the DFRT (e.g. the order of dimensions of data before and after the DFRT in a neural network process) or the native or underlying structure of the hardware accelerator.

In one proposed embodiment, the number of sequences or instances of input data to undergo a DFRT is D in the above examples, with the length of each sequence being B. The proposed mechanism facilitates evaluation of a DFRT for multiple sequences using a single convolution to execute a single matrix multiplication across multiple sequences being processed. In the case of DCT A=B=N, as the weight matrix is a square matrix.

Thus, the precise shape of the convolution kernel will depend upon the implementation of the hardware accelerator (e.g. the dimensions of tensors across which the hardware accelerator is configured to process data in parallel). The shape of the convolution kernels is such that it is equivalent to a single matrix multiplication implementing a DCT on a particular sequence of input data.

In a previously described example, a single matrix multiplication is performed in order to execute a DFRT on a plurality of different sequences of input data.

However, in other examples, multiple matrix multiplications may be performed for different sequences of input data x (e.g. where different sequences are represented along different height or width dimensions of a tensor).

For instance, consider a scenario in which a hardware accelerator is configured to process tensors of the form [batch, height, width, channel]. In this scenario, the values of some input data x to be processed via a DCT may be positioned along the channel dimension. Thus, a sequence along the channel dimension (for a same batch, height and width position) defines a sequence of values to undergo a DCT. Different sequences (which are to separately undergo a DCT) may be associated with different height, width or batch positions.

In this scenario, the DCT weight matrix (of size N,N) may be reshaped to form a convolution kernel of shape [1,1,N,N]. This corresponds to the second alternative for performing a matrix multiplication using a convolution operation previously described.

Of course, a single sequence of input data x to be processed via a DCT may be positioned along a different dimension (e.g. the width dimension - for a same batch, height and channel position). When positioned along the width dimension, the DCT weight matrix (of size N,N) may be reshaped to form a convolution kernel of shape [1,N,1,N]. This corresponds to the third alternative for performing a matrix multiplication using a convolution operation previously described. When positioned along the height dimension, the DCT weight matrix (of size N,N) may be reshaped to form a convolution kernel of shape [N,1,1,N]. This corresponds to the fourth alternative for performing a matrix multiplication using a convolution operation previously described. In either case, this will produce output data in which the result of the DCT of the data to be processed is positioned along the channel dimension.

Moreover, it is noted that the size or length of the input data (e.g. at least the value of N) will typically be predetermined or known in advance. This means is it possible to calculate and store the convolution kernel (representing the weight matrix) in advance, i.e. "offline", to save processing time.

As a second example, the result y of one example of a discrete Fourier transform DFT performed on a sequence of input data x of length N having indices (0, 1, 2, ..., N-1) is defined by the following equation:

$$y = \sum_{n=0}^{N-1} x_n e^{-\frac{2\pi i}{N}kn} \quad k=0, 1, ..., N\text{-}1 \quad\quad (3)$$

This equation can be considered as a complex matrix multiplication of the form y = Wx, where W represents a (complex) weight matrix of size NxN. The weight matrix is:

$$W = \begin{bmatrix} 1 & 1 & 1 & \cdots & 1 \\ 1 & w & w^2 & \cdots & w^{N-1} \\ 1 & w^2 & w^4 & \cdots & w^{2(N-1)} \\ \vdots & \vdots & \vdots & \ddots & \vdots \\ 1 & w^{N-1} & w^{2(N-1)} & \cdots & w^{(N-1)(N-1)} \end{bmatrix} \quad\quad (4)$$

where w = e^{-2πi/N} and i is the square root of minus one.

Following the conventions of complex multiplications, this can be (re)structured as: y = [Re(W)Re(x) - Im(W)Im(x)] + i[Re(W)Im(x) + Im(W)Re(x)]. Thus, the complex weight matrix may be represented as two real weight matrices: a first real weight matrix Re(W) that represents the real part of the weight matrix W and a second real weight matrix Im(W) that represents the imaginary part of the weight matrix W.

The present invention recognises that it is possible to calculate each matrix multiplication of a DFT formulation using a separate convolution. In the present example of an approach for processing data x to produce a discrete Fourier transform output X, the first Re(W) and second Im(W) weight matrices may be reshaped into convolution kernels $K_1$, $K_2$, which are both convolved with a first tensor and second tensor representing real and imaginary parts (respectively) of the data - i.e. Re(x) and Im(x).

As previously explained, the precise shape of the reshaped convolution kernels will depend upon the implementation of the hardware accelerator, and in particular, upon the dimensions across which the hardware accelerator is configured to process data in parallel. The shape of the convolution kernels is such that each is equivalent to a single matrix multiplication, that forms part of an implementation of a DFT on a particular sequence of input data. Of course, it is possible to perform multiple matrix multiplications (using a single convolution process) for different sequences of input data (e.g. where different sequences are represented along different height or width dimensions).

For instance, consider the scenario in which the hardware accelerator is configured to process tensors of the form [B,H,W,C], previously explained, and the values of some input data x to be processed via a DFT are positioned along the channel dimension. In this scenario, each convolution kernel is of shape [1,1,N,N].

When the input data comprises only real values (e.g. if the input data represents audio or image data), it is possible to reduce processing requirements by avoiding processing of the (zero) imaginary component of the input data (i.e. avoid calculating $Im(W)Im(x)$ and $Re(W)Im(x)$).

Moreover, it is recognised that when the input data comprises only real values, then the output of a DFT performed on this input data exhibits Hermitian symmetry. Thus, the DFT over N samples will be completely specified by only $(N/2 + 1)$ elements of output data (rather than N elements).

Thus, the size of the weight matrices for use in a DFT may be effectively reduced to being of size $Nx(N/2+1)$, rather than size NxN. This results in the generated convolution kernels being of a reduced size as well, e.g. a shape of [1,1,N, N/2+1], or [1,N,1, N/2+1] or [N,1,1,N/2+1] - depending upon along which dimension values to undergo a same DFT are positioned.

This approach has real applications, as sampled or generated media signals (such as audio/image data) are formed of only real values. This has a particular application in the conversion of sampled signals into Fourier-transformed signals for processing by a neural network (e.g. conversion of audio into a spectrogram-like representation for neural network processing, as exemplified below).

The above examples provide mechanisms for applying a DFRT to a sequence of input data (e.g. representing samples from a signal, such as an audio signal or monitoring signal). However, the skilled person will be readily capable of modifying the proposed approaches for performing a DFRT to process multi-dimensional data (e.g. 2D data such as an image or 3D data such as a 3D image).

Figures of this disclosure are used to describe methods for performing a DFRT on some input data. The described methods and figures will be understood to apply both to single sequences that are processed, as well as to input tensors composed of multiple sequences.

For instance, different sequences of input data may be located at different indexes along the height dimension, with the values of each being positioned along the channel dimension.

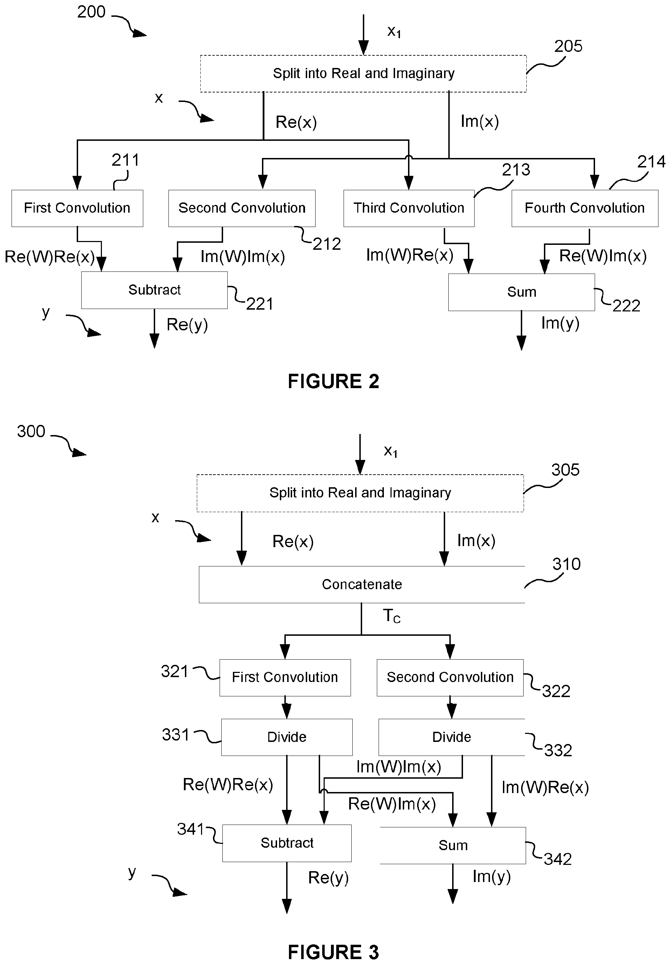

Figure 2 illustrates an overview of a method 200 for performing a discrete Fourier transform (DFT) on some input data x using a hardware accelerator to produce output data y. The approach makes use of the restructured complex weight matrix to the form of first and second convolution kernels $K_1$, $K_2$ as previously described. The hardware accelerator comprises fixed-function circuitry including at least convolution hardware (e.g. one or more convolution engines) for performing one or more convolution operations. The hardware accelerator may therefore be a neural network accelerator.

In this example, the hardware accelerator is configured to process tensors of shape [batch, height, width, channel], as previously described. A single instance of data to undergo the DFT (i.e. the values of x or the samples) may be positioned along the channel dimension, which has size N (i.e. length(x) = N). Different instances of data to undergo the DFT may be represented by different positions in the width or height dimension. For instance, a first series/sequence of values to undergo a DFT may be positioned along [1,1,1,1:N] with a second series/sequence of values to undergo a DFT positioned along [1,1,2,1:N], where 1 is the index of the first location on each dimension, and the notation a:b means a series/sequence is positioned along elements a to b inclusive on that dimension.

The input data x to be processed following the method 200 is formed of two tensors. A first tensor $Re(x)$ represents the real part of data to be processed and a second tensor $Im(x)$ represents the imaginary part of data to be processed. Both tensors have a same number of dimensions, and elements of each tensor correspond to one another. Thus, the value at position [a,b,c,d] of the first tensor and the second tensor are the real and imaginary part of a particular complex value.

In some examples, the first and second tensors may be generated in an optional step 205 from a single complex tensor $x_1$ provided as (initial) input data. However, this step is not essential, and pairs of tensors may instead be received and processed.

To form the real part of the output data, the first tensor $Re(x)$ is convolved in a first convolution 211 and the second tensor $Im(x)$ is convolved in a second convolution 212. The first convolution is performed using the first convolution kernel $K_1$ and the second convolution is performing using the second convolution kernel $K_2$. The output of the second convolution is subtracted from the output of the first convolution in a step 221 (i.e. to perform $Re(W)Re(x) -Im(W)Im(x)$). The output of step 221 is the real part $Re(y)$ of the output data y.

To form the imaginary part of the output data, the first tensor is convolved in a third convolution 213 and the second tensor is convolved in a fourth convolution 214. The third convolution is performed using the second convolution

kernel $K_2$ and the fourth convolution is performing using the first convolution kernel $K_1$. The outputs of the third and fourth convolutions are summed in a step 222 (i.e. to perform Im(W)Re(x)+Re(W)Im(x)). The output of step 222 is the imaginary part Im(y) of the output data y.

It has previously been mentioned how some forms of input data may comprise only real values. Thus, in some examples, the second and fourth convolutions are not performed, and steps 221 and 222 are not performed. Rather, in this scenario, the output of the first convolution is the real part Re(y) of the output data and the output of the fourth convolution is the imaginary part Im(y) of the output data.

Such an embodiment for performing a DFT may be particularly advantageous for some real applications, e.g. if sensor sampled data is being processed as part of a neural network process, e.g. for pre-processing in advance of analysis by a neural network. This is because such an embodiment requires fewer processing resources, and is therefore more efficient.

It has also been previously described how, for real values, the output data (i.e. the outcome of performing a DFT on some input data) exhibits Hermitian symmetry, so that the output data is completely specified by (N/2+1) elements. Thus, the convolution kernels may have shape [1,1,N,1+ N/2], or [1,N,1, 1+N/2] or [N,1,1,1+N/2] - depending upon the dimension along which values to undergo a same DFT are positioned.

This provides an even more resource efficient mechanism for performing a DFT, when (it is known that) the input data comprises only real values. This has a particular real application in the processing of audio or visual data, such as image data.

Figure 3 illustrates an overview of an alternative method 300 for performing a discrete Fourier transform (DFT) on some input data x using a hardware accelerator, to produce output data y. The alternative method provides a more efficient mechanism for performing the DFT.

Like the embodiment described with reference to Figure 2, the input data x to be processed following the method 300 is formed of two tensors. A first tensor Re(x) represents the real part of data to be processed and a second tensor Im(x) represents the imaginary part of data to be processed. Both tensors have a same number of dimensions, and elements of each tensor correspond to one another, i.e. the values at position (a,b,c,d) of the first and second tensors are the real and imaginary parts of a same element (or complex value).

The first and second tensors may be generated in an optional step 305 from a single complex tensor $x_1$ provided as (initial) input data. However, this step is not essential, and pairs of tensors may instead be received and processed.

It has been recognised that the equation y = [Re(W)Re(x) - Im(W)Im(x)] + i[Re(W)Im(x) + Im(W)Re(x)] is formed of two matrix multiplications using Re(W) and two matrix multiplications using Im(W). To improve efficiency, it is possible to use a single convolution to calculate both Re(W)Re(x) and Re(W)Im(x) if Re(x) and Im(x) are concatenated on an appropriate dimension. One reason this approach is efficient is because weights can be reused without the need to introduce special hardware or software for reusing weights across different convolutions. The reuse of weights in this way means that the weights do not need to be loaded onto the hardware accelerator twice, saving power, execution time and bandwidth. Similarly, a single process could be used to calculate both Im(W)Im(x) and Im(W)Re(x) if Re(x) and Im(x) are concatenated on an appropriate dimension.

Thus, the method 300 may comprise a step 310 of concatenating the first and second tensors together to produce a concatenated tensor Tc. The two tensors are concatenated in a dimension over which the DFT is not being computed (i.e. values at different indices along this dimension do not contribute to the same value of the output data).

The concatenation step 310 may be omitted if, for instance, input data x is already structured as a single tensor in which the real and imaginary parts of the data to undergo a DFT is concatenated on one of the dimensions.

The concatenated tensor is then processed in a first convolution 321, performed using the first convolution kernel $K_1$ and the concatenated tensor Tc. The (original) concatenated tensor is processed in a second convolution 322, performed using the second convolution kernel $K_2$ and the concatenated tensor $T_C$.

The output of the first convolution 321 is split or separated in step 331, into real and imaginary components. This can be achieved, for instance, by splitting the output of the first convolution along the dimension on which the first and second tensors were concatenated.

Similarly, the output of the second convolution 322 is split or separated (in step 332) into real and imaginary components. This can be achieved, for instance, by splitting the output of the first convolution along the dimension on which the first and second tensors were concatenated.

The data output by steps 331 and 332 produces four tensors, representing Re(W)Re(x), Im(W)Im(x), Im(W)Re(x) and Re(W)Im(x). Appropriate summing and/or subtraction can be performed in order to produce the real and imaginary parts of the output data (i.e. to provide the result of the DFT process). In particular, the tensor representing Im(W)Im(x) may be subtracted from the tensor representing Re(W)Re(x) to produce the real part of the output data in a step 341. The tensor representing Im(W)Re(x) may be summed with the tensor representing Re(W)Im(x) to produce the imaginary part of the output data in a step 342.

Either of the methods 200, 300 described with reference to Figs. 2 and 3 can adapted to perform an inverse DFT. In particular, if the elements of both convolution kernels $K_1$, $K_2$ are divided by N and the second convolution kernel

$K_2$ is negated (i.e. multiplied by - 1), then executing the same method 200, 300 with these convolution kernels will produce an inverse DFT result. The processed convolution kernels (for use with inverse DFTs) may be precomputed and stored in memory, to reduce a number of calculations that are performed and provide a more efficient system. In other words, the convolution kernels for performing an inverse DFT may be calculated in advance of performing the DFT, as the necessary values for the convolution kernels can be predefined.

More complex Fourier-related transforms, or operations that make use of Fourier-related transforms, can be performed making use of the approaches and concepts outlined previously in this disclosure. In particular, a FFT and/or STFT may make use of the concepts proposed with respect to the DFT. An MFCC (Mel Frequency Cepstral Coefficients) may make further use of a previously described DCT approach.

A Fast Fourier Transform (FFT) is an algorithm that performs a Fourier transform with reduced computational complexity compared to the DFT approach outlined above. The DFT has complexity $O(N^2)$, whereas an FFT that performs a full recursion has complexity $O(N.\log(N))$.

There are various forms and variants of the FFT that are well known to the skilled person. One suitable example of an FFT is the Cooley-Tukey algorithm. The following working example of an implementation of a Cooley-Tukey algorithm is one that uses a radix-2 FFT approach.

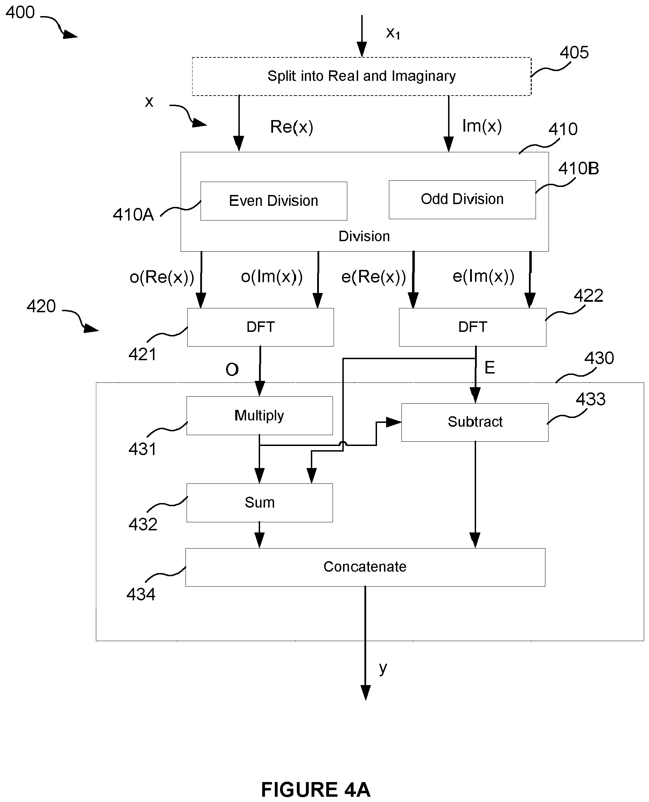

In particular, Figure 4A illustrates a method 400 of performing a Fast Fourier Transform on some input data. The input data is again formed of two input tensors: a first tensor Re(x) representing the real part of data to be processed and a second tensor Im(x) representing the imaginary part of data to be processed.

The first and second tensors may be generated in an optional step 405 from a single complex tensor $x_1$ provided as (initial) input data. However, this step is not essential, and pairs of tensors may instead be received and processed.

In a step 410, each tensor Re(x) and Im(x) is divided or separated into two sub-tensors, thereby producing two sets of sub-tensors, by performing even 410A and odd 410B divisions. In this context, "divide" or "division" will be understood to mean deinterleaving of two or more interleaved components, such as the odd and even elements of a sequence. Thus, the first tensor Re(x) will be divided into a first sub-tensor o(Re(x)) and a second sub-tensor e(Re(x)), such that the first sub-tensor comprises (only) samples corresponding to odd indices from the first input tensor and the second sub-tensor comprises (only) samples corresponding to even indices from the first input tensor. Similarly, the second tensor Im(x) will be divided into a third sub-tensor o(Im(x)) and a fourth sub-tensor e(Im(x)), such that the third sub-tensor comprises (only) the odd sampled second input tensor and the fourth sub-tensor comprises (only) the even sampled second input tensor. The first and third sub-tensors form a first set of sub-tensors (being the set of odd sampled sub-tensors) and the second and fourth sub-tensors form a second set of sub-tensors (being the set of even sampled sub-tensors).

According to an innovative aspect of the present disclosure, step 410 may be performed using convolutions. In particular, two separate convolutions can be performed on each input tensor to produce the respective sub-tensors. An odd-sampling convolution kernel applied to either input tensor produces the odd values of the input tensor, whereas applying an even-sampling convolution kernel produces the even values of the input tensor.

Consider a scenario in which the values of each input tensor are positioned along the channel axis/dimension (of the tensor having dimensions [batch, height, width, channel]). In this scenario, the convolution kernel (having dimensions [H, W, $C_1$, $C_2$]) will have a shape [1,1, N, N/2] (where N is the number of values along the channel dimension of the input tensor, i.e. the size of that dimension).

The value ($w_{c,d}$) of the odd-sampling convolution kernel at a position (0, 0, c, d), where indexing is taken to start at zero, is defined by the following equation:

$$w_{c,d} = \begin{cases} 1 & if\ c =\ 2d + 1 \\ 0 & otherwise \end{cases} \tag{5}$$

The value ($w_{c,d}$) of the even-sampling convolution kernel at a position (0, 0, c, d), where indexing is taken to start at zero, is defined by the following equation:

$$w_{c,d} = \begin{cases} 1 & if\ c =\ 2d \\ 0 & otherwise \end{cases} \tag{6}$$

As this size N may be known in advance, the convolution kernels can be generated and stored in advance (i.e. "offline") to reduce computational complexity. Where the neural network accelerator contains support for weight compression, these highly sparse binary weight matrices can be reduced in size significantly, which in turn may reduce bandwidth and memory requirements.

In another example, step 410 may be performed using deconvolutions. In particular, a separate deconvolution may be performed on each input tensor to produce the respective sub-tensors.

In particular, the deconvolution may be performed on each tensor Re(x) and Im(x) using a kernel that can for example be constructed by concatenating (along an unused spatial dimension, e.g. the height dimension) of the transpose of the odd-sampling convolution kernel and the even-sampling convolution kernel. This may for example result in a deconvolution kernel of shape [2, 1, N, N/2] that, when applied on an input of shape [B,1,W,N] in which the sequences to undergo a FFT are on the channel dimension, results in an output of shape [B,2,W,N/2], in which the first location on the height dimension may contain the values from odd indexed input locations and the second location on the height dimension may contain the values from even indexed input locations.

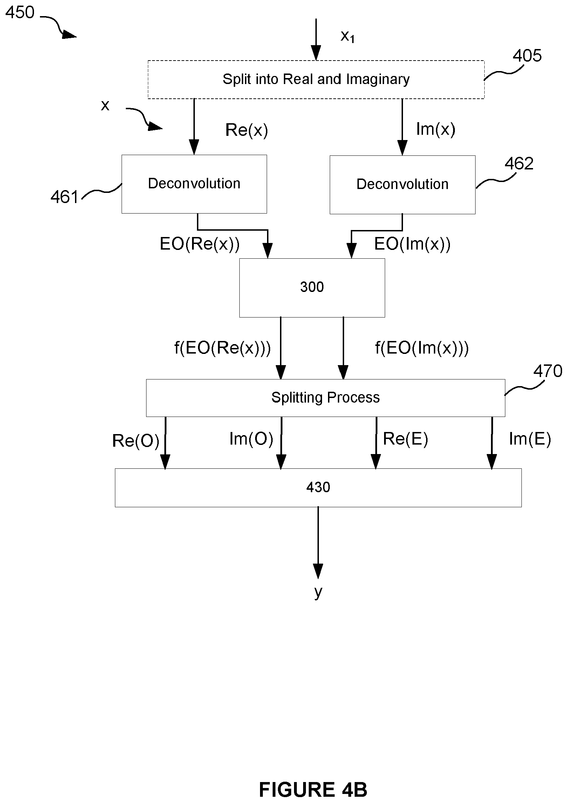

This may be followed by a split to separate into independent tensors for odd and even indexed locations, as required by the remainder of the FFT algorithm as shown in Figure 4A. An alternative approach is illustrated by Figure 4B.

If step 405 is performed, step 410 may be applied to the initial (complex) tensor $x_1$ to produce an odd and even sampled complex tensor. The odd and even sampled complex tensors may then be split into real and imaginary parts to produce the set of sub-tensors, e.g. in a modified step 405.

In yet another example, step 410 is performed using one or more reshaping and/or splitting operations in order to separate odd and even indexed values from one another (i.e. without the need to use any convolution or deconvolution operations). A reshape operation may effectively reshape an input tensor of shape [B,H,W,$C_1$] (in which values to be indexed are located along the channel dimension of size $C_1$) to produce an output tensor of shape [B,H,W$C_1$/2, 2] of dimension [batch, height, width, channel]. In particular, the reshaping operation effectively groups the values along the channel dimension of the tensor to be split into groups of two, a first value of each group being positioned at the first index in the channel dimension of the output tensor, and a second value being located at the second index. Different groups are located at different indexes in the width dimension. Of course, the height dimension may be used instead of the width dimension. The output tensor may then be split, e.g. along the channel dimension, to produce the odd and even indexed tensors.

The method 400 may then perform a DFT process 420, comprising steps 421 and 422, which each comprise performing a DFT on each set of sub-tensors. This may be performed by carrying out the method 200 or 300 described with reference to Figs. 2 to 3. This effectively performs a DFT on the odd-indexed part of the input data (to produce odd-indexed DFT data O) and a DFT on the even-indexed part of the input data (to produce even-indexed DFT data E).

O contains both the real and imaginary parts of the transformed odd-indexed part of the input data. E contains both the real and imaginary parts of the transformed even-indexed part of the input data. These may comprise separate (sub-) tensors of real and imaginary parts.

Figure 4A illustrates steps 421, 422 as a block of a block diagram. The skilled person will appreciate how the different parts of odd and even-sampled sub-tensors may be processed separately.

It will be appreciated that a single DFT process may be performed for carrying out steps 421 and 422. Figure 4B illustrates a modified version 450 of the method 400 described in Figure 4A, in which a single DFT process is performed during production of the odd-indexed DFT data O and the even-indexed DFT data E. Figure 4B thereby provides an alternative approach to performing steps 405 to 420 illustrated in Figure 4A.

The modified method 450 comprises performing a deconvolution on each tensor Re(x) and Im(x), in steps 461 and 462, using a kernel that can for example be constructed by concatenating (along an unused spatial dimension, e.g. the height dimension) the transpose of the odd-sampling convolution kernel and the even-sampling convolution kernel. This may for example result in a deconvolution kernel of shape [2,1,N,N/2] that, when applied on an input of shape [B,1,W,N] in which the sequences to undergo a FFT are on the channel dimension, results in an output of shape [B,2,W,N/2], in which the first location on the height dimension (the dimension of size 2) may contain the values from odd indexed input locations and the second location on the height dimension may contain the values from even indexed input locations. Of course, the height dimension is just an example, and another dimension could be used (e.g. the width dimension).

In this way, two tensors are produced. A first tensor EO(Re(x)), which can be labelled a first even-odd tensor or first intermediate tensor, contains the even and odd indexed values of the tensor Re(x), with odd values positioned at one location of a height dimension and even values positioned at another location of the height dimension. A second tensor EO(Im(x)), which can be labelled a second even-odd tensor or second intermediate tensor, contains the even and odd indexed values of the tensor Im(x), in a similar manner.

The tensors produced by steps 461 and 462 are then processed using a discrete Fourier transform. For instance, the method 300 describes with reference to Figure 3 may be performed to process the first and second even-odd tensors, to produce transformed even-odd tensors. As the values of odd and even indexed values are positioned at different locations on the height dimension, a single DFT process (such as that described in method 300) is able to perform a Fourier transform on the even-odd tensors. The transformed even-odd tensors then undergo a splitting process 470, to produce the odd-indexed DFT data O and the even-indexed DFT data E.

The proposed approach, which makes use of method 300, is particularly advantageous, as it reduces the number of convolutions (a resource-intensive process) that need to be performed when carrying out a Fast Fourier Transform. However, the method 300 can instead be replaced with the approach used in step 200 to provide an alternative approach for performing an FFT.

After completion of step 420 or 470 the method 400 or 450 performs a step 430.

The method 400 may then combine 430 the results of steps 421 and 422 to produce the output of the fast Fourier transform y. In fast Fourier transform terminology, this is called "applying the twiddle factor". Thus, method 400 may comprise a twiddle factor process.

This process 430 may be performed by multiplying each element $O_k$ of O by a predetermined value $e^{-\frac{2\pi i}{N}k}$ or $w_{tw}$ - i.e. the twiddle factor - in a complex multiplication step 431. The output of step 431 may be summed with E in a step 432. The output of step 431 is also subtracted from E in a step 433. The outputs of steps 432 and 433 are concatenated together in a step 434 to produce the output of the fast Fourier transform. This approach follows established procedures for calculating the output of the FFT from odd and even indexed DFT outputs. Other approaches will be apparent to the skilled person.

Steps 431 to 434 may be performed separately for the real and imaginary parts of O and E. In other examples, the real and imaginary parts are concatenated together (e.g. in an unused dimension) and processed simultaneously.

It will also be appreciated that the value $e^{-\frac{2\pi i}{N}k}$ is complex, and that steps 431 to 434 may comprise additional separate processing for maintaining the real and imaginary parts of intermediate results separate to one another, and recombining intermediate results (where appropriate). The twiddle factor applied in step 431 is constant and may be precomputed for a given sequence length.

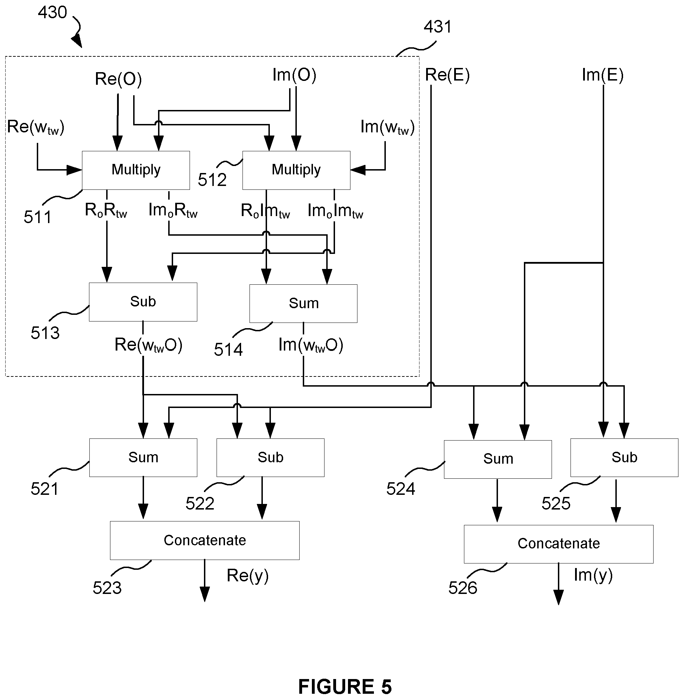

A more complete example of a twiddle factor process is illustrated in Figure 5, which illustrates a method 430 for performing a twiddle factor process 430.

The method 430 receives, as input, four sub-tensors. A first sub-tensor Re(O) contains the real part of the odd-sampled input tensor following a DFT. A second sub-tensor Im(O) contains the imaginary part of the odd-sampled input tensor following a DFT. A third sub-tensor Re(E) contains the real part of the even-sampled input tensor following a DFT. A fourth sub-tensor Im(E) contains the imaginary part of the odd-sampled input tensor following a DFT.

In a step 511, the first and second sub-tensors are both multiplied by the real part of $e^{-\frac{2\pi i}{N}k}$, i.e. by Re($w_{tw}$), to produce a first multiplied result $R_oR_{tw}$ (real odd times real twiddle) and a second multiplied result $Im_oR_{tw}$ (imaginary odd times real twiddle). In a step 512 the first and second sub-tensors are both multiplied by the imaginary part of $e^{-\frac{2\pi i}{N}k}$, i.e. by Im($w_{tw}$), to produce a third multiplied result $R_oIm_{tw}$ (real even times imaginary twiddle) and a fourth multiplied result $Im_oIm_{tw}$ (imaginary odd times imaginary twiddle).

In a step 513 the fourth multiplied result is subtracted from the first multiplied result, to produce the real part Re($w_{tw}$O) of a multiplication between O and the twiddle factor $w_{tx}$. In a step 514, the second and third multiplied results are summed to produce the imaginary part of a multiplication between O and the twiddle factor $w_{tx}$ Im($w_{tw}$O).

Step 511 to 514 are equivalent to step 431 of Figure 4A.

In a step 521, Re($w_{tw}$O) is summed with Re(E). In a step 522 Re($w_{tw}$O) is subtracted from Re(E). In a step 523, the outputs of steps 521 and 522 are concatenated together. This produces the real part of the output of the FFT process Re(y).

In a step 524, Im($w_{tw}$O) is summed with Im(E). In a step 525 Im($w_{tw}$O) is subtracted from Im(E). In a step 526, the outputs of steps 524 and 525 are concatenated together. This produces the imaginary part of the output of the FFT process Im(y).

Steps 521 and 524 are equivalent to step 432 of Figure 4A. Steps 522 and 525 are equivalent to step 433 of Figure 4A. Steps 523 and 526 are equivalent to step 434 of Figure 4A.

It will be appreciated that the DFTs 421 and 422 in the method described above may be replaced with further applications of the same method 400. The DFTs contained in these "sub-FFTs" may also be replaced with further FFTs, and so forth. This is known in the art as "recursion", and in the limit results in a computational complexity of O(N.logN) rather than the O($N^2$) required for DFT. However, the inventors have recognised that it is often advantageous to stop this recursion early, e.g. after 1 or 2 iterations, since deeper recursion results in a more complex graph with more intermediate data. If recursion is too deep, then overheads from transferring intermediate data and managing execution outweigh the computational benefits.

The underlying concepts of the present disclosure may be used in a short-time Fourier transform (STFT). Conceptually, a STFT extracts a series of overlapping parts from a sequence of values, which are separately processed using a Fourier-related transform technique (such as an FFT or a DFT).

Extraction of a series of overlapping parts effectively breaks up the sequence of values into a sequence of chunks or parts that overlap one another. Thus, any given chunk/part may contain at least one value found in a sequentially next chunk/part in the sequence of chunks/parts.

Each part may undergo windowing, to reduce the contribution of values at the edge of the window (i.e. the edge of part of the sequence being processed). Window functions are well known to the skilled person, such as Hann, Hamming or Gaussian windows. This approach reduces the effect of (spurious) frequencies being identified/present in the output of the STFT as a result of abrupt stopping (i.e. the end of the window). However, it will be appreciated that some forms of STFT do not require windowing.

Thus, a typical STFT would apply some window function to each extracted part of the sequence to produce a set of windowed parts. Each windowed part would then be subject to a Fourier transform (e.g. using a DFT or an FFT) to produce the output of the STFT. However, directly adopting such an approach for execution on a hardware accelerator would be inefficient, as it requires the storage and tracking of multiple separate pieces of data (i.e. each part of the sequence), the number of which would be dependent upon the length of the input sequence.

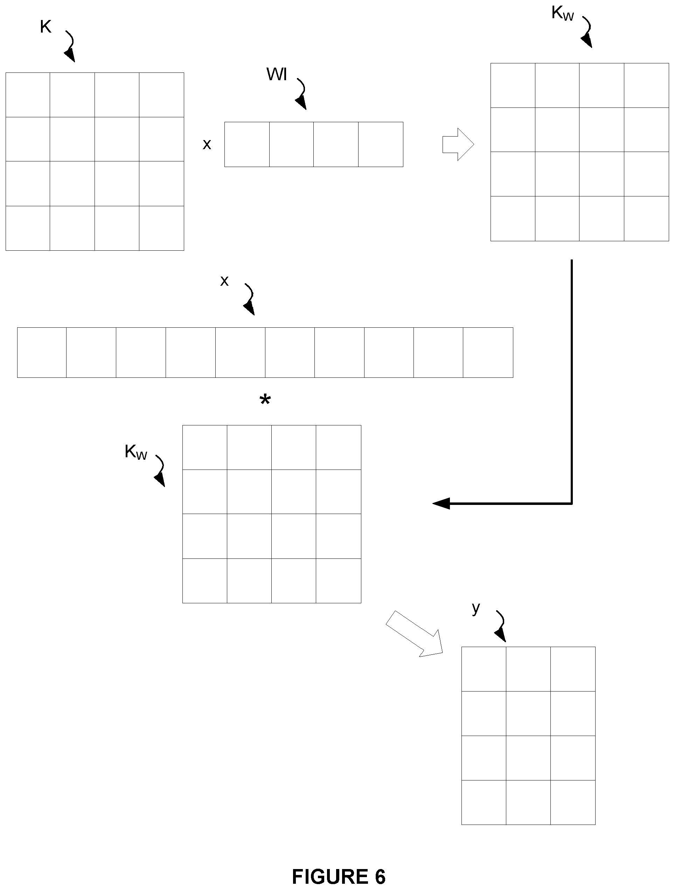

Figure 6 illustrates an approach for performing a short-time Fourier transform (STFT) which overcomes at least some of these problems.

Rather than individually extracting each part of the sequence of values, processing each extracted part of the sequence using a windowing function to obtain one or more windowed sequences, and performing a separate Fourier transform on each windowed sequence, these processes can be combined into a smaller number of steps (e.g. a single step) for execution on an example hardware accelerator.

In particular, the processes of windowing and performing the Fourier transform may be combined by appropriate modification of the convolution kernel(s) used to perform the Fourier transform. In particular, the convolution kernel(s) may be modified using a windowing function. For instance, as illustrated in Figure 6, each convolution kernel K may be multiplied by a windowing matrix or vector WI, to produce respective windowed convolution kernels $K_W$. The windowed convolution kernels may be produced "offline" (i.e. before the STFT process is initiated, i.e. is executed on the hardware accelerator). This is because the size of the parts into which data is split (when performing the STFT) is predetermined, thus the size of the window is predetermined.

Only one (windowing) convolution kernel is illustrated in Fig. 6 for the sake of improved clarity. However, it will be appreciated that multiple convolution kernels may be used (e.g. one representing the real part of the weight matrix and one representing the imaginary part of the weight matrix).

Moreover, instead of extracting different parts of a sequence to undergo a Fourier transform (following windowing) a strided convolution may be performed (e.g. with the/each windowed convolution kernel), where the size of the stride is selected so that each position of the convolution kernel corresponds to the position of a part of the data to undergo a Fourier transform (with windowing). This effectively combines the processes of extracting each part and processing the (windowed) parts using a separate Fourier transform into a strided convolution that can be executed efficiently on the example hardware accelerator.

Figure 6 illustrates this process, in which some input data x (e.g. of shape [1,1,M,1]) is processed using two windowed convolution kernels Kw (of which only one is illustrated), e.g. of shape [1,N,1,N], with a stride S to produce output data y representing an STFT result. Given an input of shape [1, 1, M, 1], a kernel of shape [1, N, 1, N] and stride S, the output would have shape [1, 1, F, N], where F = ceil((M-N+1)/S).

The output data is formed of two parts, a real part and an imaginary part. In this context, the value N represents the size of the window (i.e. the size of each part) and the stride S relates to an overlap between the windows (the greater the value of S, the lower the amount of overlap). The values to undergo the STFT are positioned along the width dimension (here: along the dimension of size M). In the specific example shown in Figure 6, M = 10, N = 4 and S = 3. This results in F=3, and an output y with shape [1, 1, 3, 4]. Please note that the two dimensions of size 1 in the weight and data tensors are suppressed in Figure 6 for the sake of clarity.

Some hardware accelerators may be configured such that it is not possible to perform a strided convolution along a channel dimension (e.g. strides may only be performed along a width or height dimension). In these examples, the values to undergo a STFT may be positioned along the width or height dimension. This may comprise, for instance, reshaping or permuting the dimensions of a tensor, e.g. if the values to undergo an STFT are initially positioned along the channel dimension, reshaping such that the values to undergo an STFT are positioned along the height and/or width dimension. This reshaping or dimension permutation is not necessary if the values are already positioned along a dimension along which striding, during a convolution, can be performed. The convolution kernel used may be shaped appropriately, as would be recognised by the skilled person.

It will be appreciated that, in general, the (windowed) strided convolution has complex inputs and complex coefficients, and may be implemented as multiple real convolutions and auxiliary operations (e.g. additions and subtractions) as appropriate, following the steps described above in the context of DFT and FFT. Any suitable DFT or FFT approach proposed may be adapted for use in performing an STFT. In particular, if (it is known that) the input data comprises only real values, a DFT/FFT approach that makes use of convolution kernels having a shape [1, N,1,1+N/2] or [N,1,1,1+N/2] may be used. This would provide a more resource efficient approach for performing the STFT.

A spectrogram can be generated by appropriate processing of output data provided by a STFT, and is usually defined using the magnitude of the STFT output. A spectrogram is a useful representation for further processing of audio data, and improves the identification of relevant aspects of audio data.

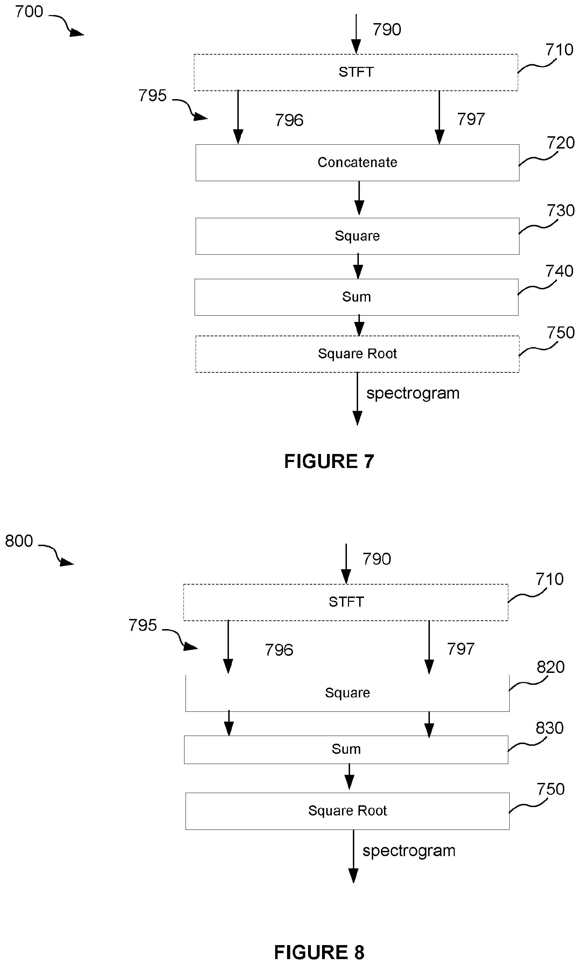

Figure 7 illustrates a method 700 of calculating a spectrogram of input data 790. The input data here comprises an input tensor of dimension [B,H,W,C] (previously described). In one example, a sequence of values that are processed to generate a spectrogram is positioned along the width dimension. Thus, in one example, the input data may comprise an input tensor of shape [1,1,M,1], M being the number of values that form the sequence of values for which a spectrogram is to be generated.

The method 700 comprises a step 710 of processing the input data using a STFT, to produce STFT output data 795. Any previously described method of performing a STFT may be performed. The STFT output data comprises a real part 796 and an imaginary part 797. Step 710 may be omitted if the input data 790 instead comprises STFT output data.

In the illustrated example, the real part 796 and the imaginary part 797 are concatenated together in the height dimension in a concatenation step 720.

Each element in the concatenated tensor is then squared, e.g. multiplied by itself, in a squaring step 730. This is performed using an element-wise multiplication operation, available to the fixed-function circuitry 185 of the exemplary hardware accelerator. Thus step 730 may be performed using the element-wise operations unit of the hardware accelerator.

The corresponding real and imaginary elements are then summed together to produce a summed tensor in summing step 740. In this example, the summing step comprises, for each position in the width dimension, summing the two values in the height dimension to produce the summed tensor. This can be performed using a convolution with an appropriately configured convolution kernel (e.g. a depth-wise convolution with kernel of shape [2,1,N,1], corresponding to N groups each with a single input and output channel). Thus, a convolution operation (one of the neural network operations available on the hardware accelerator) can be employed to perform step 740.

The summed tensor is then processed in a step 750 to calculate a square root of each value. Thus, step 750 comprises processing the summed tensor (output by step 740) to calculate the square root of each value. Various components of the hardware accelerator may be repurposed to calculate the square root.

In one example, a look-up table is used to identify square root values of each value in the summed tensor. Thus, step 750 may comprise performing one or more lookups in a look-up table.

Other examples will be apparent to the skilled person, for instance, a square root can be approximated using the local response normalization unit of the hardware accelerator, e.g. which may apply the following function to each value of the summed tensor:

$$b_{x,y}^i = \frac{a_{x,y}^i}{\left(k + \alpha \sum_{j=\max\left(0,i-\frac{n}{2}\right)}^{\min\left(N-1,i+\frac{n}{2}\right)} a_{x,y}^j\right)^\beta} \tag{7}$$

in which n=1, $\alpha$=1, k=0 and $\beta$=-0.25.

The output of step 750 is a spectrogram. The proposed approach thereby provides a mechanism by which a spectrogram can be produced using the available operations of fixed-function circuitry of the exemplary hardware accelerator.

In some examples, step 750 is omitted (e.g. so that the output of step 740 acts as the spectrogram, having a squared magnitude).

In some examples, the input tensor (of dimensions [B,H,W,C]) is configured so that the sequence of values to generate the spectrogram are positioned along the height dimension. In this scenario, the concatenation step 720 may comprise concatenating the real and imaginary parts of the output data in the width dimension. The summing step 740 may be similarly modified to comprise, for each position in the height dimension, summing the two values in the width dimension to produce the summed tensor. Alternatively, the dimensions of the input tensor may be reshaped or permuted to position the sequence of values to generate the spectrogram on the width dimension.

In yet other examples, the input tensor (of dimensions [B,H,W,C]) is configured so that the sequence of values for generating the spectrogram are positioned along the channel dimension. In this scenario, the input tensor may be reshaped, or its dimensions permuted (so that the values lies along the width or height dimension), and one of the preceding methods may be performed.

Figure 8 illustrates an alternative method 800 for calculating a spectrogram of input data 790.

As before, the input data 790 here comprises an input tensor of dimension [B,H,W,C] (previously described).

In one example, a sequence of values that are processed to generate a spectrogram (representing the sequence of values) is positioned along the width dimension. Thus, in one example, the input data may comprise an input tensor of shape [1,1,M,1], in which M is the number of values that form the sequence of values for which a spectrogram is to be generated.

Similarly, the method 800 comprises a step 710 of processing the input data using a STFT, to produce STFT output data 795. Any previously described method of performing a STFT may be performed. The STFT output data comprises a real part 796 and an imaginary part 797. Step 710 may be omitted if the input data 790 instead comprises STFT output data.

However, instead of concatenating the real part and imaginary part together, each part of the STFT output data is processed separately, before combining during later processing.

Thus, each element in the real 796 and imaginary 797 part of the STFT output data may be squared in a squaring step 820. Squaring step 820 may be performed using element-wise multiplication operations (i.e. using the element-wise operations unit 185 of the exemplary hardware accelerator 100). Put another way, a squaring step 820 may be performed on each part of the STFT output data.

Corresponding values of the squared real and squared imaginary part may then be summed together in a summing step 830 to produce a summed tensor. Thus, a value at position (a,b,c,d) of the squared real part is added to the value at position (a,b,c,d) of the squared imaginary part to produce the value at position (a,b,c,d) of the summed tensor. Summing step 830 may be performed using an element-wise summing operation (i.e. using the element-wise operations unit 185 of the hardware accelerator 100).

The summed tensor is then processed in a step 750 to calculate a square root of each value. Thus, step 750 comprises processing the summed tensor (output by step 830) to calculate the square root of each value. Approaches for using the hardware accelerator to calculate a square root have been previously described. The output of step 750 is the spectrogram.

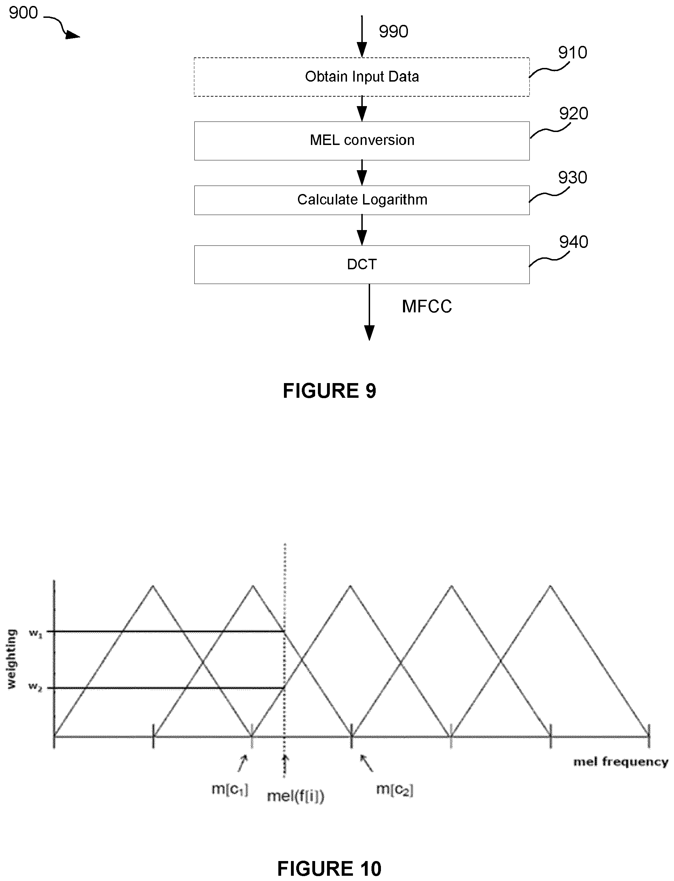

Figure 9 illustrates a method for processing some input data 990 into a mel spectrogram using MFCC (Mel Frequency Cepstral Coefficients).

An MFCC output provides components of a representation of the audio spectrogram, which is intended to better approximate the human auditory system response to sounds. This representation of audio signals is commonly used in audio compression, and also proves useful for analysis of audio data by neural networks.

The method 900 comprises a step 910 of obtaining input data 990 comprising a spectrogram to undergo an MFCC analysis process. The spectrogram may be generated, for instance, using the mechanism previously described (e.g. with reference to Figure 7 or 8) for generating a spectrogram.

The method 900 further comprises a conversion process 920, which converts the spectrogram from the Hertz scale to the mel (or Mel) scale using overlapping (triangular) windows, to produce a mel spectrogram. For the sake of clarity, the spectrogram obtained in step 910 is hereafter referred to as the hertz-scale spectrogram.

Various formulae for converting a hertz frequency (f) to the mel scale are known in the art. One example of such a formula is set out in the below equation:

$$\mathrm{mel}(f) = 1127 \ln \left( \frac{f}{700} + 1 \right) \qquad (8)$$

In the continuous case, an amplitude at a mel frequency mel($f$) in the mel-scale spectrogram has the same amplitude as the corresponding frequency $f$ in the hertz-scale spectrogram.

However, in the discrete case, the frequencies represented by the uniformly placed positions in the mel-scale spectrogram are not uniformly placed in the corresponding hertz scale and do not align, due to the non-linear mapping (equation (8)) between the two. This means that conversion from hertz to mel requires an interpolation or "rebinning" process to be carried out. A method for performing this rebinning is described below.

The value (i.e. amplitude) a[$i$] of the hertz-scale spectrogram at bin with index i is therefore shared between one or more bins in the output mel spectrogram at consecutive indices according to corresponding weights. These contributions may be weighted such that the weights sum to 1.

Let f[$i$] represent the frequency in hertz corresponding to the discrete hertz spectrogram bin at index $i$, and let $m$[c] represent the frequency on the mel-scale corresponding to the discrete mel spectrogram bin at index c. mel($f$[i]) represents the mel-scale frequency corresponding to the frequency in hertz of the input spectrogram at index i according to equation (8).

Figure 10 shows how weights $w_1$ and $w_2$ corresponding to the discrete mel spectrogram at output indices $c_1$ and $c_2$ can be calculated according to an example. In this example, overlapping triangular windows are positioned such that a frequency in hertz can be converted to corresponding weights for up to two mel-scale spectrogram bins.

The value (amplitude) of the hertz-scale spectrogram a[$i$] at index $i$ is then shared between the mel-scale spectrogram bins according to the weights. In particular, a value/amplitude $a[i]$ of the hertz-scale spectrogram at index $i$ will contribute a value of $w_1a[i]$ to the amplitude at a first index $c_1$ of the mel spectrogram and a value of $w_2a[i]$ to the amplitude at a second index $c_2$ of the mel spectrogram. The value of $w_1$ can be calculated as being equal to $(m[c_2]-mel(f[i]))/(m[c_2]-m[c_1])$. The value of $w_2$ is equal to $1-w_1$ so that the weights sum to one.

Thus, each of the values in the mel spectrogram will be given by the sum of certain products between values of the hertz-scale spectrogram and weights. The value of the weights is independent of the values of the hertz-scale spectrogram. Thus, as the parameters for calculating the weights are known, e.g. may be constant for a fixed size input, it is possible to calculate the weights in advance. It has been herein recognised that the fact that this conversion can be represented as a sum of products means that it is possible to compute the conversion of the hertz-scale spectrogram to a mel spectrogram by a matrix multiplication, and therefore using a convolution. In particular, it is possible to compute the conversion using a single convolution, such that it may be implemented efficiently as a natively supported operation using the convolution (fixed-function) hardware 140 of the exemplary hardware accelerator 100.

In this way, a convolution kernel may be produced that, when convolved with the hertz-scale spectrogram, produces the mel-scale spectrogram. The convolution kernel may be produced from a weight matrix of dimensions [U,V], e.g. using a reshaping and/or dimension permutation process previously described. The size of U is equal to the number of values in the hertz spectrogram. The size of V is equal to the number of values in the mel spectrogram.

The weight matrix has, for an i-th index along the U dimension, all elements set to 0, except for those at indices $c_1$ and $c_2$ of the V-dimension. Indices $c_1$ and $c_2$ (which differ for each index i along the U-dimension) represent the values of the mel spectrogram to which the i-th value of the hertz spectrogram contribute.

In one working example, the hertz-scale spectrogram is of dimensions [B,H,W,C], and is configured so that the sequence of values of the spectrogram for a given timestep are positioned along the channel dimension, so that different positions along the channel dimension (for a same B,H,W position) contain different frequencies of the spectrogram. In this scenario, the convolution kernel produced from the weight matrix may be of shape $[1,1,X,C_N]$, where size(X) = size(C), to produce a mel spectrogram of dimensions $[B,H,W,C_N]$.

The mel spectrogram is then processed in logarithm step 930 to calculate a logarithm of each value contained in the mel spectrogram. One method for performing the logarithm step 930 is to use one or more look-ups. Thus, step 930 may comprise performing one or more lookups in a look-up table, e.g. using the activation unit. Another example could be to process each value using a Mitchell approximation (e.g. by processing each value using an element-wise operation or applying a defined activation function to each value) to produce an estimated logarithmic result for each value, e.g. using an element-wise operations unit and/or the activation unit. In some examples, corrections to the Mitchell approximation(s) may be performed using a look-up operation.

In at least one example, step 930 comprises a step of adding a very small valued constant (e.g. 0.005) to each value of the mel spectrogram before calculating a logarithm of each value. This avoids attempts to compute the logarithm of zero.

The method 900 then performs a step 940 of processing the output or result of step 930 using a discrete cosine transformation (DCT), to produce the mel frequency cepstral coefficients (MFCCs). Approaches for processing data using a DCT to produce a DCT result have been previously described.

For improved contextual understanding, a more complete description of an exemplary hardware accelerator will now be provided, by referring back to Figure 1, which illustrates an exemplary hardware accelerator 100 that is configured to evaluate a plurality of elementary neural network operations according to examples of the present disclosure. As previously explained, the available operations on the hardware accelerator 100 can be repurposed for performing discrete Fourier-related transforms and operations that make use of or comprise discrete Fourier related transforms.

The hardware accelerator 100 comprises digital logic circuitry that is configured to receive data (including weights and input tensors) and commands for processing them. The hardware accelerator 100 comprises a memory interface 110, an input buffer controller 115, a command decoder 120, a coefficient buffer controller 125, a coefficient buffer 130, n input buffers 135, convolution hardware 140 (here formed of n, i.e. one or more, convolution engines 140a-140n, n accumulators 145, an accumulation buffer 150, an activation unit 155, a local response normalize (LRN) unit 165, a shared buffer 170, a pooling unit 175, and an element-wise operations unit 185. The hardware accelerator 100 can be used to evaluate elementary neural network operations in order to implement any previously described function, e.g. discrete Fourier-related transforms, as previously explained.

The memory interface 110 is configured to provide an interface between the hardware accelerator 100 and external memory 15. The external memory 15 may be considered as a separate module to the hardware accelerator 100. The command or configuration information may, for example, comprise information regarding weight and data size and format as well as their location in the external memory.

The memory interface 110 is configured to receive, from external memory 15, weights and data to be used in calculations within the neural network, as well as command information to control the operation of the hardware accelerator 100. The received weights (also referred to herein as coefficients) are passed to the coefficient buffer controller 125 and the received data is passed to the input buffer controller 115. The received commands are passed to the command decoder 120, which, in turn, is configured to decode the commands and subsequently issue control information to elements of the hardware accelerator, including the coefficient buffer controller 125 and input buffer controller 115 to control the manner in which the weight and input data is stored in the buffers.

In practice, the number of weights and data received in a single read from external memory 15 will depend upon the size of the coefficient buffer 130 and the input buffer 135. The weights are passed from the coefficient buffer controller 125 to the coefficient buffer 130 and the data received is passed from the input buffer controller 115 to a plurality of input buffers 135a-135n. The number of input buffers will depend upon the specific implementation of the accelerator 100 but may take any value. The input data is shared across all of the input buffers 135a-135n. The input buffers each form an effective bank such that the number of input buffers can be increased or decreased depending on the application.

The input buffers 135a-135n are connected to each of a plurality of multiplexers since each convolution engine 140a-140n (of the convolution hardware) requires access to all of the effective 'banks' of the input data. The multiplexers are each configured to select an output from one of the input buffers 135 and to pass the values output from the selected input buffer 135 to a respective convolution engine 140a-140n. In addition, weights from the coefficient buffer 130 are provided as a second input into each convolution engine 140a-140n. The convolution hardware 140 is configured to perform a convolution calculation on the received input data using the weights received from the coefficient buffer 130. The resultant output of each convolution engine 140a-140n is provided as an input to a respective accumulator of a plurality of accumulators 145a-145n.

Each accumulator 145a-145n is connected to an accumulation buffer 150. The accumulation buffer 150 is configured to store accumulated results received from each accumulator 145a-145n. The accumulation buffer 150 is connected to the memory interface 110. As such, the accumulation buffer 150 is configured to send and receive data to and from external memory 15 via memory interface 110. Specifically, the accumulation buffer 150 is configured to be able to store and restore its values from the external memory 15 via memory interface 110, as will be described in more detail below. The accumulation buffer 150 is connected to the input of the accumulators 145a-145n and is configured to feed values back into the accumulators 145a-145n to enable accumulation calculations to take place.

The accumulation buffer 150 is configured to pass accumulated values to the activation unit 155 and/or the element-wise operations unit 185. The activation unit 155 is configured to perform at least one of a number of different activation functions. The activation unit 155 incorporates a lookup table (LUT), for storing an activation function, such as a sigmoid activation, to be applied to data input to the activation unit. The activation unit 155 is also operable to add/subtract a bias value to/from a tensor. This can be used to add a constant to the tensor or subtract a constant from the tensor.

The resultant value calculated by the activation unit 155 can be passed to be processed by the LRN unit 165 and/or the pooling unit 175 via the shared buffer 170. The LRN unit 165 is configured to perform a local response normalisation. This may be performed within a single plane of input data. Alternatively or in addition, the LRN operation may also be performed across planes.

A result stored in the shared buffer 170 is passed to the memory interface 110, which can either store the result in external memory 15 or pass the result back into the input buffers for further processing without having to first be passed out to external memory.

The shared buffer 170 is configured to buffer values from any one or more of the activation unit 155, the LRN unit 165, the pooling unit 175, and the element-wise operations unit 185 until all the values required to perform the next operation are available. In this way, the shared buffer 170 is used for efficiency of storage as it can hold values required in later operations without having to use external memory 15.

The element-wise operations unit 185 comprises circuitry configured to perform element-wise operations on tensors received from the accumulation buffer 150 and/or activation unit 155. The supported element-wise operations may include element-wise addition, subtraction, multiplication, division, and maximum (or minimum) of the respective elements of the tensors.

Element-wise operations are operations that are repeated for multiple elements of at least one tensor. The operations are typically repeated for all elements of the tensor. Two categories of element-wise operation may be considered: unary operations, having a single operand, and binary operations, having two operands. The element-wise operations unit 185 handles binary element-wise operations. Element-wise operations may also be performed by other components of the hardware accelerator. For example, the activation unit 155 may perform unary element-wise operations, by loading a desired function into the LUT and applying the function to every element of a tensor.

Whilst the hardware accelerator of Figure 1 illustrates a particular order in which the units are arranged and thus how the processing of data flows through the hardware implementation, it will be appreciated that the specific calculations required and the order in which data is processed may vary.

In some examples, the functions performed by the activation 155, LRN 165, pooling 175, and element-wise 185 units may all be performed. In other examples, only some of these functions may be performed and not necessarily in the order set out in the hardware accelerator 100. To achieve a configurable order of processing these functions, each of the activation 155, LRN 165, pooling 175 and element-wise 185 units may be configured to receive control signalling configuring the unit into a bypass mode in which the function is not performed and the input values are simply passed through the unit without change.

In some examples, the data may need to be processed first by the convolution engines 140a-n (of the convolution hardware) and then second according to the activation, LRN, pooling, and element-wise units 155, 165, 175, 185. In these examples, the outputs from the convolution engines 140a-n are passed via the accumulators 145a-n to the accumulation buffer 150 and are then passed to activation, LRN, pooling, and element-wise units 155, 165, 175, 185 for further processing. In other examples, the data may need to be processed differently. For example, data may need to be processed first according to the activation, LRN, pooling, and element-wise units 155, 165, 175, 185 and second according to the convolution engines 140a-n.

In these arrangements, data can be passed directly to the activation unit 155 via the accumulation buffer 150, where the accumulation buffer 150 has received the input data directly from the memory interface 110 which has received the data from external memory. In this way, the processing performed by convolution engines 140a-n and accumulator 145a-n is effectively skipped and the data can be passed directly to the activation 155, LRN 165, pooling 175, and element-wise 185 units. Then, once processing using activation, LRN, pooling, and element-wise units 155, 165, 175, 185 is completed, the resultant values can be passed into the input buffer controller 115 via the memory interface 110. In some arrangements, the resultant values can be first passed to external memory 15 via memory interface 110 and then retrieved from external memory 15 before use.

In other arrangements, the memory interface 110 may pass the resultant values to the input buffer controller 115 without passing the values to external memory 15. By avoiding the need to pass the values resulting from calculations using the activation, LRN, pooling, and element-wise unit 155, 165, 175, 185 to external memory 15, memory bandwidth is reduced and therefore the latency in processing the data is also reduced.

Advantageously, since the activation, LRN, pooling, and element-wise units 155, 165, 175, 185 are placed linearly, it is possible to perform these operations back-to-back without having to retrieve data from external memory 15. In some implementations, the order in which the activation, LRN, pooling, and element-wise units 155, 165, 175, 185 are connected may vary. For example, the activation, LRN, and pooling units 155, 165, 175 may be connected in reverse order such that the pooling unit is connected to the accumulation buffer 150 and the activation unit is connected to the memory interface 110.

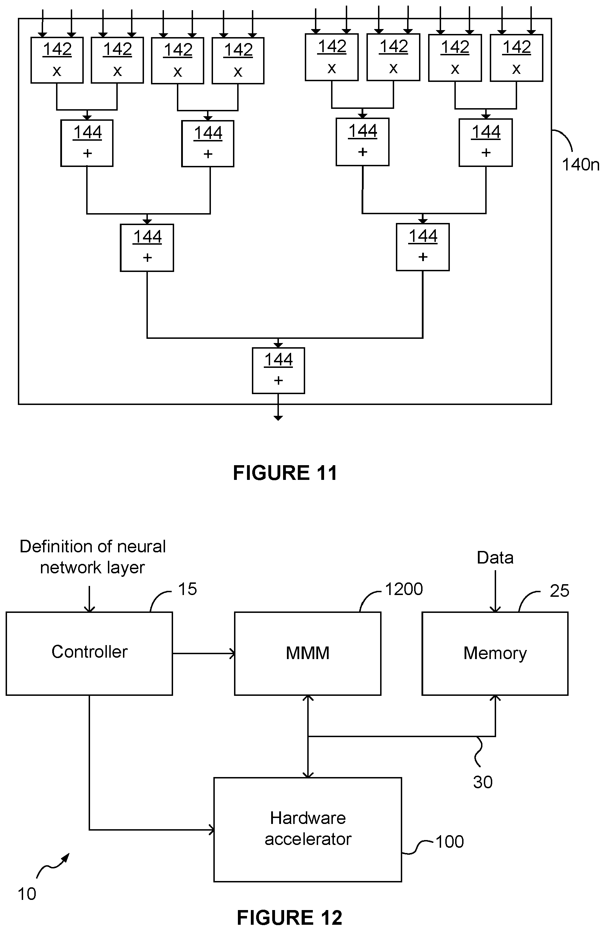

Figure 11 illustrates the structure of each of the convolution engines 140n of the convolution hardware 140 in Figure 1. The convolution engine 140n comprises a plurality of elements of multiply logic 142, each configured to multiply a weight by an input data element, and a plurality of elements of addition logic 144, configured in a tree structure to sum the outputs of the elements of multiply logic 142.

Figure 12 is a block diagram of a data processing system 10 for implementing any herein described Fourier-related transform in a hardware accelerator 100 (NNA), according to an example. The data processing system comprises the hardware accelerator 100; a controller 15; a memory 15; and a memory manipulation module (MMM) 1200. At least the hardware accelerator 100, the memory 15, and the MMM 1200 are connected by a data bus 30.

The controller 15 is configured to receive a definition of at least neural network process having such a function and map the neural network process to a plurality of elementary neural network operations that can be performed natively by the hardware accelerator 100. The controller 15 is further configured to control the hardware accelerator 100 (e.g. which may include the MMM 1200) to evaluate the neural network process by means of these elementary operations. Thus, the controller 15 controls the evaluation of the plurality of elementary neural network operations that are executed by the hardware accelerator 100 to thereby evaluate the neural network process.

The hardware accelerator 100 is configured to evaluate the plurality of elementary neural network operations.

The MMM 1200 is configured to manipulate multidimensional data in memory in various ways, including transpose or permute operations that interchange different dimensions of the data and/or concatenation operations for combining two or more tensors into a single tensor. In some examples, the MMM 1200 may be configured to transform data by embedding the channel dimension of the data in one or both of the width or height dimensions, or exchanging the channel dimension with one or both of these spatial dimensions. In alternative examples, the MMM may transpose or permute any other combination of the dimensions of the input data, including the batch dimension.

The MMM may, for instance, be used to perform any herein described concatenation. The MMM may, for instance, be formed as an aspect of the hardware accelerator 100, and is only here shown separately to demonstrate one possible embodiment.

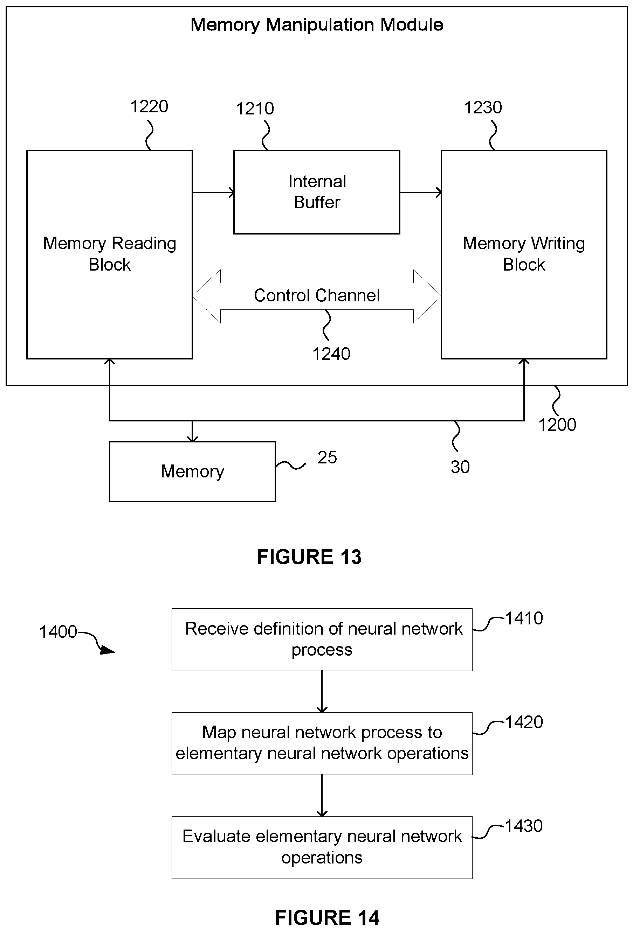

Figure 13 is a block diagram of the MMM 1200 used in Figure 12. As mentioned already, the MMM 1200 is coupled to the memory 15, via the bus 30. The MMM 1200 comprises a memory reading block 1220; an internal buffer 1210; and a memory writing block 1230. A control channel 1240 is used to coordinate the operations performed by the memory reading block 1220 and the memory writing block 1230. Both the memory reading block 1220 and the memory writing block 1230 are coupled to the bus 30. An output of the memory reading block 1220 is coupled to an input of the internal buffer 1210. An input of the memory writing block 1230 is coupled to an output of the internal buffer 1210.

The memory reading block 1220 reads data from the memory 15. The memory reading block 1220 writes the data (that was read from the memory 15) to the internal buffer 1210. The memory writing block 1230 reads data from the internal buffer 1210 and writes the data (that was read from the internal buffer 1210) back to the external memory 15. By the combination of operations performed by the memory reading block 1220 and the memory writing block 1230, the data may be transformed in the ways previously described. The transformation may occur when moving the data from the memory 15 to the internal buffer 1210, or it may occur when moving the data from the internal buffer 1210 to the memory 15. In some cases, the transformation may occur in part between the memory 15 and the internal buffer 1210, and in part between the internal buffer 1210 and the memory 15.

Because the memory reading block 1220 and the memory writing block 1230 are provided as separate hardware blocks, they are able to operate in parallel. That is, the memory reading block 1220 can perform steps 310 and 320 while the memory writing block 120 is performing steps 330 and 340 (the steps are explained in detail below with reference to FIG. 1A and 1B). The control channel 130 provides for communication between the memory reading block 1200 and the memory writing block 120, to maintain synchronisation between the two blocks.

The present disclosure thereby proposes a data processing system in which embodiments can be implemented. In the illustrated examples, such as in Figure 12, the data processing system 10 was constructed around the hardware accelerator 100 - which, in those examples, was an NNA. However, the data processing system may instead be implemented partially or entirely within an NNA. For example, the hardware accelerator 200, the MMM 40, and the controller 15 may represent sub-components within an NNA.

Figure 14 is a flowchart 1400 illustrating a method performed by the data processing system 10 according an example of the present disclosure. In this example, the data processing system 10 implements a function. The function may, for instance, be a discrete Fourier-related transform and/or a function that makes use of a discrete Fourier-related transform.

In step 1410, the controller 14 receives as an input a definition of a neural network process involving the function. In step 1420, the controller maps the neural network process to an equivalent computational graph comprising a plurality of elementary neural network operations. In step 1430, the hardware accelerator 100 evaluates the plurality of elementary neural network operations, to produce the result of the neural network process.

In the present example, the mapping to the plurality of elementary operations is based on a recasting of the function to elementary components, embodiments of which have been previously described. In particular, one or more multiplication operations (that make use of one or more weight matrices) of the discrete Fourier-related transform may be recast as a convolution through appropriate reshaping of the weight matrix (or matrices) used in the multiplication operation.

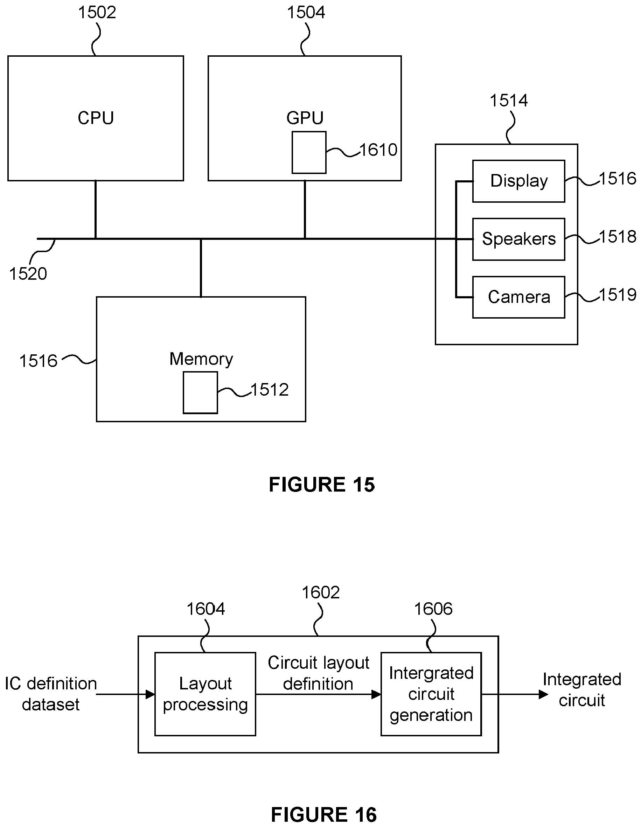

Figure 15 shows a computer system in which the data processing systems described herein may be implemented. The computer system comprises a CPU 1502, a GPU 1504, a memory 1506 and other devices 1515, such as a display 1516, speakers 1518 and a camera 1519. A processing block 1510 is implemented on the GPU 1504. In other examples, the processing block 1510 may be implemented on the CPU 1502. The components of the computer system can communicate with each other via a communications bus 1520. A store 1512 is implemented as part of the memory 1506.

While Fig. 15 illustrates one implementation of a data processing system, it will be understood that a similar block diagram could be drawn for an artificial intelligence accelerator system - for example, by replacing either the CPU 1502 or the GPU 1504 with a Neural Network Accelerator (NNA), or by adding the NNA as an additional unit. In such cases, the processing block 1510 can be implemented in the NNA.

Any data processing system illustrated in Figures 1-15 (where a flow chart may represent different modules of a data processing system) are shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems described herein may be embodied in hardware on an integrated circuit. The data processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java® or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system configured to perform any of the methods described herein, or to manufacture a data processing system comprising any apparatus described herein. An integrated circuit definition dataset may be, for example, an integrated circuit description.

Therefore, there may be provided a method of manufacturing, at an integrated circuit manufacturing system, a data processing system as described herein. Furthermore, there may be provided an integrated circuit definition dataset that, when processed in an integrated circuit manufacturing system, causes the method of manufacturing a data processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a data processing system will now be described with respect to Figure 16.

Figure 16 shows an example of an integrated circuit (IC) manufacturing system 1602 which is configured to manufacture a data processing system as described in any of the examples herein. In particular, the IC manufacturing system 1602 comprises a layout processing system 1604 and an integrated circuit generation system 1606. The IC manufacturing system 1602 is configured to receive an IC definition dataset (e.g. defining a data processing system as described in any of the examples herein), process the IC definition dataset, and generate an IC according to the IC definition dataset (e.g. which embodies a data processing system as described in any of the examples herein). The processing of the IC definition dataset configures the IC manufacturing system 1602 to manufacture an integrated circuit embodying a data processing system as described in any of the examples herein.

The layout processing system 1604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1604 has determined the circuit layout it may output a circuit layout definition to the IC generation system 1606. A circuit layout definition may be, for example, a circuit layout description.

The IC generation system 1606 generates an IC according to the circuit layout definition, as is known in the art. For example, the IC generation system 1606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1606 may be in the form of computer-readable code which the IC generation system 1606 can use to form a suitable mask for use in generating an IC.

The different processes performed by the IC manufacturing system 1602 may be implemented all in one location, e.g. by one party. Alternatively, the IC manufacturing system 1602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a data processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 16 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 16, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

In the present application, ordinal numbers are used as labels to distinguish different features/elements from one another. Where appropriate, the ordinal numbers may be replaced by other labels or removed entirely (e.g. a "first element" may simply be an "element" if there is only a single one of these elements present). The skilled person would be readily capable of reformatting claims and other text appropriately. Ordinal numbers should not be interpreted as conferring a priority or order of features/elements, such that a "second" step of a process may be performed before a "first" step.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method (200, 300, 400, 450, 940) of implementing a discrete Fourier-related transform using a hardware accelerator (100) comprising fixed-function circuitry including convolution hardware (140) configured to perform one or more convolution operations, wherein the discrete Fourier-related transform comprises at least one matrix multiplication operation, the method comprising:

obtaining input data $(x, x_1)$, wherein the input data contains values to undergo the discrete Fourier-related transform;

obtaining at least one convolution kernel (K), wherein each convolution kernel is derived from a weight matrix that represents a multiplicand or multiplier for the at least one matrix multiplication operation of the discrete Fourier-related transform; and

executing the discrete Fourier-related transform on the input data using the hardware accelerator, wherein the at least one matrix multiplication operation of the discrete Fourier-related transform is executed by using the convolution hardware to perform one or more convolution operations using the at least one convolution kernel.

2. The method of claim 1, wherein each convolution kernel is generated by reshaping and/or permuting the dimensions of a respective weight matrix, preferably wherein the convolution kernel is generated before the input data is obtained.

3. The method of any of claims 1 to 2, wherein:

the input data comprises two or more sequences of values, each of which is to be individually transformed using a respective instance of the discrete Fourier-related transform; and

a single convolution operation is used to perform a matrix multiplication operation, of the at least one matrix multiplication operations, of multiple instances of the discrete Fourier-related transform on respective sequences of values.

4. The method of any of claims 1 to 3, wherein the discrete Fourier-related transform is a discrete Fourier transform.

5. The method of claim 4, wherein:

the input data comprises a first tensor (Re(x)), comprising only the real part of values to undergo the discrete Fourier transform;

the discrete Fourier transform comprises a first set of matrix multiplications comprising:

multiplying (211, 321) the first tensor by a first weight matrix (Re(W)) to produce a first multiplied tensor; and

multiplying (212, 322) the first tensor by a second weight matrix (Im(W)) to produce a second multiplied tensor;

the at least one convolution kernel comprises a first convolution kernel derived from the first weight matrix and a second convolution kernel derived from the second weight matrix; and

the first set of matrix multiplications is executed by using the convolution hardware to perform at least two convolutions using the first and second convolution kernels.

6. The method of claim 5, wherein:

the input data further comprises a second tensor (Im(x)) comprising only the imaginary parts of values to undergo the discrete Fourier transform;

the discrete Fourier transform comprises a second set of matrix multiplications comprising: multiplying (213, 321) the second tensor by the first weight matrix to produce a third multiplied tensor; and

multiplying (214, 322) the second tensor by the second weight matrix to produce a fourth multiplied tensor; and

the second set of matrix multiplications is executed by using the convolution hardware to perform at least two convolutions using the first and second convolution kernel to perform the second set of matrix multiplications.

7. The method of claim 6, wherein the first and second set of matrix multiplications are performed by:

concatenating (310) the first and second tensors to produce a concatenated tensor;

performing (321) a first convolution on the concatenated tensor using the first convolution kernel to produce a first convolution output containing the first and third multiplied tensors;

performing (322) a second convolution on the concatenated tensor using the second convolution kernel to produce a second convolution output containing the second and fourth multiplied tensors;

splitting (331, 332) the first and second convolution output to produce the first, second, third and fourth multiplied tensors.

**8.** The method of claim 6, wherein the first and second set of matrix multiplications are performed by:

performing (211) a first convolution on the first tensor using the first convolution kernel to produce the first multiplied tensor;

performing (213) a second convolution on the first tensor using the second convolution kernel to produce the second multiplied tensor;

performing (214) a third convolution on the second tensor using the first convolution kernel to produce the third multiplied tensor; and

performing (212) a fourth convolution on the second tensor using the second convolution kernel to produce the fourth multiplied tensor.

**9.** The method of any of claims 6 to 8, wherein the discrete Fourier transform further comprises:

subtracting (221, 341) the fourth multiplied tensor from the first multiplied tensor to produce the real part of the output of the discrete Fourier transform; and

summing (222, 342) the second multiplied and third multiplied tensors to produce the imaginary part of the output of the discrete Fourier transform.

**10.** The method of any of claims 5 to 9, wherein the first weight matrix is equal to the real part of a complex matrix defined by:

$$\begin{bmatrix} 1 & 1 & 1 & \cdots & 1 \\ 1 & w & w^2 & \cdots & w^{N-1} \\ 1 & w^2 & w^4 & \cdots & w^{2(N-1)} \\ \vdots & \vdots & \vdots & \ddots & \vdots \\ 1 & w^{N-1} & w^{2(N-1)} & \cdots & w^{(N-1)(N-1)} \end{bmatrix}$$

in which N is equal to the length of any sequence of the input data to undergo the discrete Fourier transform and w = $e^{-2\pi i/N}$, and wherein the second weight matrix is equal to the imaginary part of the complex matrix.

**11.** A method (400) of implementing a discrete fast Fourier transform using a hardware accelerator comprising fixed-function circuitry including convolution hardware configured to perform one or more convolution operations, the method comprising:

obtaining input data (x), wherein the input data contains values to undergo the fast Fourier transform;

dividing (410) the input data into two or more parts;

performing (420) a discrete Fourier transform (421, 422) on each part of the input data using the method of any of claims 4 to 10 to produce a respective two or more DFT outputs (O, E); and

combining (430) the DFT outputs using the hardware accelerator to produce an FFT output that contains a fast Fourier transform of the input data.

**12.** The method of claim 11, wherein the step of dividing the input data into two or more parts comprises:

processing the input data using two or more convolution kernels, each configured to extract a predetermined part of the input data; or.

processing the input data using a deconvolution (461, 462); or

processing the first tensor using an odd-sampling convolution kernel to produce an odd tensor containing only the odd-indexed values of the first tensor; and processing the first tensor using an even-sampling convolution kernel to produce an even tensor containing only the even-indexed values of the first tensor.

**13.** The method of any of claims 1 to 4, wherein the discrete Fourier related transform is a discrete cosine transform, and preferably wherein:

the input data comprises a first tensor, comprising real values to undergo the discrete cosine transform;

the discrete cosine transform comprises a DCT multiplication operation comprising multiplying the first tensor by a DCT weight matrix to produce an output of the discrete cosine transform;

the at least one convolution kernel comprises a DCT convolution kernel derived from the DCT weight matrix; and

the DCT multiplication operation is executed by using the convolution hardware to perform a convolution of the first tensor using the DCT convolution kernel.

14. A non-transitory computer readable storage medium having stored thereon computer readable instructions that, when executed at a computer system, cause the computer system to perform the method of any of claims 1 to 13.

15. A data processing system (10) for implementing a discrete Fourier-related transform, wherein the discrete Fourier-related transform comprises at least one multiplication operation, the data processing system comprising:

a hardware accelerator (100) comprising fixed-function circuitry configured to perform a set of available elementary neural network operations, the fixed-function circuitry comprising at least convolution hardware (140) configured to perform one or more convolution operations; and
a controller (15) configured to:

obtain input data (x, $x_1$), wherein the input data contains values to undergo the discrete Fourier-related transform;
obtain at least one convolution kernel (K), wherein each convolution kernel is derived from a weight matrix that represents a multiplicand or multiplier for at least one multiplication operation of the discrete Fourier-related transform; and
execute the discrete Fourier-related transform on the input data using the hardware accelerator, wherein at least one multiplication operation of the discrete Fourier-relate transform is executed by using the convolution hardware to perform one or more convolution operations using the at least one convolution kernel.

**FIGURE 1**

200

$x_1$

| Split into Real and Imaginary | 205 |

x

Re(x)          Im(x)

211          213          214

| First Convolution | | Second Convolution | | Third Convolution | | Fourth Convolution |

Re(W)Re(x)    Im(W)Im(x)    Im(W)Re(x)    Re(W)Im(x)

212

| Subtract | 221

y

Re(y)

| Sum | 222

Im(y)

**FIGURE 2**

300

$x_1$

| Split into Real and Imaginary | 305 |

x

Re(x)          Im(x)

| Concatenate | 310 |

$T_C$

321          | First Convolution |          | Second Convolution | 322

331          | Divide |          | Divide | 332

Im(W)Im(x)

Re(W)Re(x)          Im(W)Re(x)

Re(W)Im(x)

341          | Subtract |          | Sum | 342

Re(y)          Im(y)

y

**FIGURE 3**

**FIGURE 4A**

**FIGURE 4B**

**FIGURE 5**

K

Wl

$K_W$

x

x

*

$K_W$

y

**FIGURE 6**

700

↓ 790

```
┌─────────────────────────────────────┐
│                STFT                 │ 710
└─────────────────────────────────────┘
```

795

796          797

```
┌─────────────────────────────────────┐
│             Concatenate             │ 720
└─────────────────────────────────────┘
                  ↓
┌─────────────────────────────────────┐
│               Square                │ 730
└─────────────────────────────────────┘
                  ↓
┌─────────────────────────────────────┐
│                 Sum                 │ 740
└─────────────────────────────────────┘
                  ↓
┌─────────────────────────────────────┐
│             Square Root             │ 750
└─────────────────────────────────────┘
```

spectrogram

↓

## FIGURE 7

800

↓ 790

```
┌─────────────────────────────────────┐
│                STFT                 │ 710
└─────────────────────────────────────┘
```

795

796          797

```
┌─────────────────────────────────────┐
│               Square                │ 820
└─────────────────────────────────────┘
                  ↓
┌─────────────────────────────────────┐
│                 Sum                 │ 830
└─────────────────────────────────────┘
                  ↓
┌─────────────────────────────────────┐
│             Square Root             │ 750
└─────────────────────────────────────┘
```

spectrogram

↓

## FIGURE 8

900

990

| Obtain Input Data | 910 |

| MEL conversion | 920 |

| Calculate Logarithm | 930 |

| DCT | 940 |

MFCC

**FIGURE 9**

weighting

$w_1$

$w_2$

$m[c_1]$   mel(f[i])   $m[c_2]$

mel frequency

**FIGURE 10**

**FIGURE 11**

**FIGURE 12**

## Memory Manipulation Module

1220

1210

1230

**Memory Reading Block**

**Internal Buffer**

**Memory Writing Block**

Control Channel

1240

1200

**Memory** 25

30

**FIGURE 13**

1400

Receive definition of neural network process 1410

Map neural network process to elementary neural network operations 1420

Evaluate elementary neural network operations 1430

**FIGURE 14**

FIGURE 15

FIGURE 16

Europäisches
Patentamt

European
Patent Office

Office européen
des brevets

# EUROPEAN SEARCH REPORT

Application Number

EP 22 20 2226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU TIANJIAN ET AL: "Nonuniform Fast Fourier Transform on Tpus", 2021 IEEE 18TH INTERNATIONAL SYMPOSIUM ON BIOMEDICAL IMAGING (ISBI), IEEE, 13 April 2021 (2021-04-13), pages 783-787, XP033917868, DOI: 10.1109/ISBI48211.2021.9434068 [retrieved on 2021-05-17] * the whole document * | 1-15 | INV. G06N3/063 G06N3/0464 |

| TECHNICAL FIELDS SEARCHED (IPC) |
|---|
| G06N |

The present search report has been drawn up for all claims

| Place of search | Date of completion of the search | Examiner |
|---|---|---|
| The Hague | 25 February 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)